# EUROPEAN PATENT SPECIFICATION

(11) **EP 4 148 844 B1**
(45) Date of publication and mention of the grant of the patent: **26.03.2025**
(21) Application number: 21929428.7
(22) Date of filing: 14.07.2021
(51) Int. Cl.: H01M 50/54, H01M 10/04, H01M 10/052, H01M 10/0587, H01M 4/66, H01M 10/42, H01M 50/531, H01M 50/536, H01M 50/538, H01M 50/103

(54) **ELECTRODE ASSEMBLY, PROCESSING METHOD AND APPARATUS, BATTERY CELL, BATTERY, AND ELECTRONIC DEVICE**
ELEKTRODENANORDNUNG, VERARBEITUNGSVERFAHREN UND -VORRICHTUNG, BATTERIEZELLE, BATTERIE UND ELEKTRONISCHE VORRICHTUNG
ENSEMBLE ÉLECTRODE, PROCÉDÉ ET APPAREIL DE TRAITEMENT, ÉLÉMENT DE BATTERIE, BATTERIE ET DISPOSITIF ÉLECTRONIQUE

(43) Date of publication of application: 15.03.2023
(73) Proprietor: Contemporary Amperex Technology (Hong Kong) Limited, Central, Central And Western District (HK)
(72) Inventor: NI, Jun, Ningde Fujian 352100 (CN); YU, Honggang, Ningde Fujian 352100 (CN); SHANGGUAN, Huihui, Ningde Fujian 352100 (CN); DU, Xinxin, Ningde Fujian 352100 (CN); TANG, Daichun, Ningde Fujian 352100 (CN)
(74) Representative: Rowlands, Stuart Michael
(86) International application number: PCT/CN2021/106359
(87) International publication number: WO 2023/283847

(56) References cited:
- EP-A1- 3 367 485
- CN-A- 104 137 306
- CN-A- 104 466 093
- CN-A- 105 336 916
- CN-A- 110 556 511
- CN-A- 113 113 566
- CN-U- 203 574 063
- CN-U- 212 810 367
- CN-U- 212 810 367
- JP-A- 2003 157 902
- JP-B2- 4 060 576
- US-A1- 2015 010 784

## Description

### Technical Field

The present application relates to the field of batteries, and in particular to an electrode assembly and a processing method and device therefor, a battery cell, a battery, and a power consuming apparatus.

### Background Art

A rechargeable battery, which may be referred to as a secondary battery, refers to a battery that can continue to be used after an active material is activated by means of charging after the battery is discharged. The rechargeable battery are widely used in electronic apparatuses, such as mobile phones, laptops, electric bicycles, electric vehicles, electric airplanes, electric ships, electric toy cars, electric toy ships, electric toy airplanes and electric tools.

The rechargeable battery may include a nickel-cadmium battery, a nickel-hydrogen battery, a lithium ion battery, a secondary alkaline zinc-manganese battery, etc.

At present, the batteries most used in vehicles are generally lithium ion batteries. As a rechargeable battery, the lithium ion battery has the advantages of small size, high energy density, high power density, many cycles of use, long storage time, etc.

The rechargeable battery comprises an electrode assembly and an electrolyte, the electrode assembly comprising a cathode plate, an anode plate, and a separator located between the cathode plate and the anode plate. All the cathode plates have a cathode active material layer, for example, a cathode active material of the cathode active material layer may be lithium manganate, lithium cobaltate, lithium iron phosphate or lithium nickel-cobalt manganate; and all the anode plates have an anode active material layer on a surface, for example, an anode active material of the anode active material layer may be graphite or silicon.

With the expanding range of application of the rechargeable batteries, the user's requirement for the stability of the battery capacity of rechargeable battery cells is also increasing.

How to maintain the stability of the charging capacity of battery cells becomes a problem in the industry.
US2015010784A1 relates generally to a sealed nonaqueous electrolyte secondary battery. EP3367485A1 relates generally to a current collector, an electrode plate and a battery containing the current collector. JP4060576B2 and CN113113566A relate generally to current collectors. CN212810367U relates generally to an electrode assembly, a battery cell, a battery and a power utilization device.

### Summary of the Invention

Aspects of the invention are set out in the claims. Various aspects of the present application provide an electrode assembly and a processing method and device therefor, a battery cell, a battery, and a power consuming apparatus, which overcome or at least partially solve the problem mentioned above.

A first aspect of the present application provides an electrode assembly, comprising a cathode plate, an anode plate, a separator and an electrically conductive layer, wherein the separator is used to separate the cathode plate and the anode plate; the cathode plate, the separator and the anode plate are wound to form a bent region; and the electrically conductive layer is configured such that at least a part of the electrically conductive layer is provided on a surface of the cathode plate in the bent region, the cathode plate comprises a covered region that is covered by the electrically conductive layer, and the electrically conductive layer is in parallel connection with the covered region.

By means of providing, on the surface of the cathode plate in the bent region, the electrically conductive layer that is in parallel connection with the covered region of the cathode plate, when the covered region of the cathode plate in the bent region is broken to cause the electrode assembly to have a tendency to increase the internal resistance, the electrically conductive layer can maintain the electrical connection between the broken cathode plates so as to suppress the increase of the internal resistance of the electrode assembly and then reduce the capacity fade of the battery cell to maintain the capacity stability of the battery cell. In addition, the electrically conductive layer may also provide reinforcement for the cathode plate in the bent region, reducing the probability of breakage in the covered region of the cathode plate.

In some embodiments, one or both surfaces of the cathode plate are provided with the electrically conductive layer.

In this embodiment, by means of providing the electrically conductive layer on one or both surfaces of the cathode plate, it is possible to effectively suppress the increase of the internal resistance of the electrode assembly due to breakage of the covered region of the cathode plate in the bent region, and provide reinforcement for the cathode plate in the bent region to reduce the breakage of the covered region of the cathode plate.

In some embodiments, at least a part of the electrically conductive layer is provided at a first-bend part and/or a second-bend part of the cathode plate in the bent region.

In this embodiment, the electrically conductive layer is provided at the first-bend part and the second-bend part of the cathode plate in the bent region, and the electrically conductive layer can further reinforce the first-bend part and the second-bend part of the cathode plate, reducing the occurrence of increase of the internal resistance of the electrode assembly due to the breakage of the covered region of the cathode plate and thus improving the capacity stability of the battery cell.

In some embodiments, the electrically conductive layer is further provided at the first-bend part and/or the second-bend part of the anode plate in the bent region, and is in parallel connection with the anode plate.

In this embodiment, the electrically conductive layers are provided at the first-bend part and the second-bend part of the anode plate in the bent region, and the electrically conductive layers can further reinforce the first-bend part and the second-bend part of the anode plate, reducing the occurrence of breakage or shedding of the anode active material layer due to the bending of the anode plate or the occurrence of breakage of the anode plate.

In some embodiments, the electrically conductive layer comprises an electrically conductive base layer that is in parallel connection with the cathode plate in the bent region.

In this embodiment, the electrically conductive layer comprises an electrically conductive base layer that reinforces the cathode plate to reduce the occurrence of increase of the internal resistance of the electrode assembly due to breakage of the covered region of the cathode plate and thus improve the capacity stability of the battery cell.

In some embodiments, the entire surface of the side of the electrically conductive base layer adjacent to the cathode plate is electrically connected to the covered region in the bent region, and a center line of the bent region passes through the electrically conductive base layer in a winding direction of the electrode assembly.

In this embodiment, the cathode plate has a large bending angle at the center line of the bent region, and has high possibility of breakage. The center line of the bent region passes through the electrically conductive base layer in the winding direction of the electrode assembly. When the cathode plate is broken near the center line, the electrically conductive base layer can cover the broken part of the covered region of the cathode plate, and since the entire surface of the side of the electrically conductive base layer adjacent to the cathode plate is electrically connected to the cathode plate, the two broken portions of the covered region of the cathode plate may still remain electrically connected to each other by means of the electrically conductive base layer so as to suppress the increase of the internal resistance of the electrode assembly.

In some embodiments, the electrically conductive layer further comprises an ion barrier layer provided on the side of the electrically conductive base layer away from the cathode plate and covering the electrically conductive base layer, the ion barrier layer being used to block at least some of ions from escaping from the cathode plate located on one side of the ion barrier layer.

In this embodiment, by means of providing the ion barrier layer, during charging, it is possible to block at least some of the ions from escaping from the cathode plate on one side of the ion barrier layer and being intercalated into the anode plate so as to reduce the occurrence of lithium precipitation of the anode plate in the bent region.

In some embodiments, the electrically conductive base layer comprises, in the bent region and in the winding direction of the electrode assembly, two end portions located on two sides of the center line of the bent region, the two end portions being electrically connected to the covered region.

In this embodiment, the cathode plate has a large bending angle at the center line of the bent region, and has high possibility of breakage. The center line of the bent region passes through the electrically conductive base layer in the winding direction of the electrode assembly. When the cathode plate is broken near the center line, the electrically conductive base layer can cover the broken part of the covered region of the cathode plate, and since the two end portions of the electrically conductive base layer located on the two sides of the center line in the bent region are respectively electrically connected to the cathode plate, the two broken portions of the covered region of the cathode plate may still remain electrically connected to each other by means of the electrically conductive base layer so as to suppress the increase of the internal resistance of the electrode assembly.

In some embodiments, the electrically conductive base layer further comprises a main body portion that is connected to the two end portions; and the electrically conductive layer further comprises an ion barrier layer that is provided between the main body portion of the electrically conductive base layer and the cathode plate, the ion barrier layer being used to block at least some of ions from escaping from the cathode plate located on one side of the ion barrier layer.

In this embodiment, the ion barrier layer is provided between the main body portion of the electrically conductive base layer and the cathode plate, and the ion barrier layer is attached to the surface of the cathode plate, which can better block some of the ions from escaping from the cathode plate located on one side of the ion barrier layer and being intercalated into the anode plate so as to reduce the occurrence of lithium precipitation of the anode plate in the bent region.

In some embodiments, the electrically conductive layer further comprises an insulation layer that is provided on the side of the electrically conductive base layer away from the cathode plate and covers the electrically conductive base layer.

In this embodiment, the side of the electrically conductive base layer away from the cathode plate is provided with the insulation layer that covers the electrically conductive base layer, and when the separator in the bent region is broken, the insulation layer can prevent the cathode plate and the anode plate from being short-circuited due to direct contact between the electrically conductive base layer and the anode plate.

In some embodiments, a plurality of electrically conductive base layers are provided, and the plurality of electrically conductive base layers are arranged at intervals in a direction parallel to a winding axis of the electrode assembly.

In this embodiment, a plurality of electrically conductive base layers are provided and arranged at intervals, and compared with an integrated electrically conductive base layer, can reduce the space occupied by the electrically conductive base layers and increase the energy density of the battery cell.

**In** some embodiments, the total current passing area of the electrically conductive base layer is greater than or equal to 1/3 of the current passing area of a current collector of the cathode plate connected to the electrically conductive base layer.

**In** this embodiment, the total current passing area of the electrically conductive base layer is greater than or equal to 1/3 of the current passing area of the current collector of the cathode plate to prevent the electrically conductive base layer from shedding from the cathode plate caused by a rise of temperature of the electrically conductive base layer due to a current passing area of the electrically conductive base layer being too small, thus ensuring the safe use.

**In** some embodiments, the material of the ion barrier layer includes at least one of magnesium oxide, calcium oxide, boehmite, wollastonite, barium sulfate, calcium sulfate, calcium carbonate, aluminum oxide, silicon dioxide, polyethylene, polyvinyl chloride, polyacrylic acid/acrylate, butyl benzene, phenylanine, an ethylene-vinyl acetate copolymer, polypropylene, polyvinylidene fluoride, carboxymethyl cellulose, epoxy adhesive, silicone, polyurethane adhesive, styrene-isoprene-styrene copolymer adhesive, and modified materials thereof.

**In** some embodiments, the material of the electrically conductive base layer includes at least one of silver, gold, nickel, copper, aluminum, polypyrrole, polyphenylene sulfide, polyphthalocyanine compound, polyaniline, and polythiophene.

A second aspect of the present application provides a battery cell, comprising: a shell, an electrolyte, a cover plate, and at least one electrode assembly of the embodiments described above, wherein the shell has a receiving cavity and an opening, and the electrode assembly and the electrolyte are received in the receiving cavity; and the cover plate is used to close the opening of the shell.

A third aspect of the present application provides a battery, comprising a case, and at least one battery cell of the embodiment described above, the battery cell being received in the case.

A fourth aspect of the present application provides a power consuming apparatus. The power consuming device is configured to receive power provided by the battery of the embodiment described above.

A fifth aspect of the present application provides a processing method for an electrode assembly, the processing method comprising: providing a cathode plate, an anode plate and a separator; providing an electrically conductive layer that is arranged at a preset part of the cathode plate, the cathode plate comprising a covered region that is covered by the electrically conductive layer, and the electrically conductive layer being in parallel connection with the covered region; and winding the cathode plate, the anode plate and the separator, so that the cathode plate, the separator and the anode plate are wound to form a bent region, the preset part being configured such that at least a part of the electrically conductive layer is located in the bent region after winding.

A sixth aspect of the present application provides a processing device for an electrode assembly, the processing device comprising: a provision device for providing a cathode plate, an anode plate, a separator and an electrically conductive layer; a connecting device for connecting the electrically conductive layer to the cathode plate at a preset part of the cathode plate, the cathode plate comprising a covered region that is covered by the electrically conductive layer, and the connecting device being used to allow the electrically conductive layer to be in parallel connection with the covered region; and a winding device for winding the cathode plate, the anode plate and the separator, so that the cathode plate, the separator and the anode plate are wound to form a bent region, the preset part being configured such that at least a part of the electrically conductive layer is located in the bent region after winding.

The aforementioned description is only an overview of the technical solutions of the embodiments of the present application. In order to more clearly understand the technical means of the embodiments of the present application to implement same according to the contents of the description, and in order to make the aforementioned and other objects, features and advantages of the embodiments of the present application more obvious and understandable, specific embodiments of the present application are exemplarily described below.

### Brief Description of the Drawings

In order to more clearly illustrate the technical solutions in the embodiments of the present application, the drawings to be used in the description of the embodiments of the present application will be described briefly below. Obviously, the drawings in the following description are merely some embodiments of the present application. For those of ordinary skill in the art, other drawings can also be obtained according to these drawings without the inventive labor.
Fig. 1 is a schematic perspective structural diagram of an electrode assembly in the prior art;
Fig. 2 is a schematic structural diagram of a transverse cross-section of the electrode assembly of Fig. 1 in a direction perpendicular to a winding axis Z;
Fig. 3 is a schematic diagram showing a resistance change of an electrode assembly of Fig. 1 after a covered region of a cathode plate is broken;
Fig. 4 is a schematic structural diagram of a transverse cross-section of an electrode assembly in a flat body shape perpendicular to a winding axis according to an embodiment of the present application;
Fig. 5 is a schematic structural diagram of an anode plate according to another embodiment of the present application;
Fig. 6 is a schematic structural diagram of a transverse cross-section of an electrode assembly in another flat body shape perpendicular to a winding axis according to another embodiment of the present application;
Fig. 7 is a schematic structural diagram of a transverse cross-section of an electrode assembly in another flat body shape perpendicular to a winding axis according to another embodiment of the present application;
Fig. 8 is a schematic structural diagram of a transverse cross-section of an electrode assembly in another flat body shape perpendicular to a winding axis according to another embodiment of the present application;
Fig. 9 is a schematic structural diagram of a transverse cross-section of an electrode assembly in another flat body shape perpendicular to a winding axis according to another embodiment of the present application;
Fig. 10 is a schematic partially enlarged structural diagram of a transverse cross-section of an electrode assembly in another flat body shape perpendicular to a winding axis according to another embodiment of the present application;
Fig. 11 is a schematic structural diagram of a transverse cross-section of an electrode assembly in another flat body shape perpendicular to a winding axis according to another embodiment of the present application;
Fig. 12 is a schematic structural diagram of a cross-section E-E in Fig. 5 according to an embodiment of the present application;
Fig. 13 is a schematic structural diagram of a cross-section E-E in Fig. 5 according to another embodiment of the present application;
Fig. 14 is a schematic exploded diagram of an electrically conductive film in Fig. 13 according to an embodiment of the present application;
Fig. 15 is a schematic exploded diagram of an electrically conductive film in Fig. 13 according to another embodiment of the present application;
Fig. 16 is a schematic diagram of the electrically conductive film in a combined state in Fig. 15 according to the present application;
Fig. 17 is a schematic structural diagram of a cross-section E-E in Fig. 5 according to another embodiment of the present application;
Fig. 18 is a schematic exploded diagram of an electrically conductive film in Fig. 17 according to an embodiment of the present application;
Fig. 19 is a schematic exploded diagram of an electrically conductive film in Fig. 17 according to another embodiment of the present application;
Fig. 20 is a schematic structural diagram of a cross-section E-E in Fig. 5 according to another embodiment of the present application;
Fig. 21 is a schematic exploded diagram of an electrically conductive film in Fig. 20 according to an embodiment of the present application;
Fig. 22 is a schematic structural diagram of a cross-section in an M1 direction in Fig. 4 according to an embodiment;
Fig. 23 is a schematic structural diagram of a cross-section in an M1 direction in Fig. 4 according to another embodiment;
Fig. 24 is a schematic structural diagram of a battery cell according to another embodiment of the present application;
Fig. 25 is a schematic structural diagram of a battery module according to another embodiment of the present application;
Fig. 26 is a schematic structural diagram of a battery according to another embodiment of the present application;
Fig. 27 is a schematic structural diagram of a power consuming device according to another embodiment of the present application;
Fig. 28 is a schematic flow diagram of a processing method for an electrode assembly according to another embodiment of the present application; and
Fig. 29 is a schematic structural diagram of a processing device for an electrode assembly according to another embodiment of the present application.

### Detailed Description of Embodiments

In order to make the objectives, technical solutions and advantages of embodiments of the present application clearer, the technical solutions in the embodiments of the present application will be described clearly and completely below in conjunction with the accompanying drawings in the embodiments of the present application. Obviously, the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technological and scientific terms used herein have the same meanings as those commonly understood by those skilled in the art to which the present application belongs. The terms used in the specification of the present application herein are merely for the purpose of describing specific embodiments, but are not intended to limit the present application. The terms "comprising" and "having" and any variations thereof in the specification and the claims of the present application as well as the foregoing description of the accompanying drawings are intended to cover non-exclusive inclusions.

The phrase "embodiment" mentioned herein means that the specific features, structures and characteristics described in conjunction with an embodiment may be included in at least one embodiment of the present application. The phrase at various locations in the specification does not necessarily refer to the same embodiment, or an independent or alternative embodiment exclusive of another embodiment. Those skilled in the art understand explicitly or implicitly that an embodiment described herein may be combined with another embodiment.

The term "and/or" herein is merely a description of the associated relationship of associated objects, representing that three relationships may exist, for example, A and/or B, may be expressed as: the three instances of A alone, A and B simultaneously, and B alone. In addition, the character "/" herein generally indicates an "or" relationship between the associated objects.

In the description of the present application, it should be understood that the orientation or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the accompanying drawings and are merely for ease of description of the present application and simplification of the description, rather than indicating or implying that the devices or elements referred to must have a specific orientation or be constructed and operated in a described orientation, and therefore cannot be construed as limiting the present application. In addition, the terms "first", "second", etc. in the specification and the claims of the present application or the above accompanying drawings are used to distinguish different objects, rather than describing a specific order, and can explicitly or implicitly include one or more of the features. In the description of the present application, the term "a plurality of" means two or more, unless otherwise specified.

In the description of the present application, it should be noted that, unless otherwise explicitly specified and defined, the terms "mounting", "connecting" and "connection" should be understood in a broad sense and may be, for example, a fixed connection, a detachable connection or an integrated connection, or may be a mechanical connection or an electrical connection, may be a direct connection or an indirect connection by means of an intermediate medium, and may be communication between the interiors of two elements. For those of ordinary skill in the art, the specific meaning of the terms mentioned above in the present application can be construed according to specific circumstances.

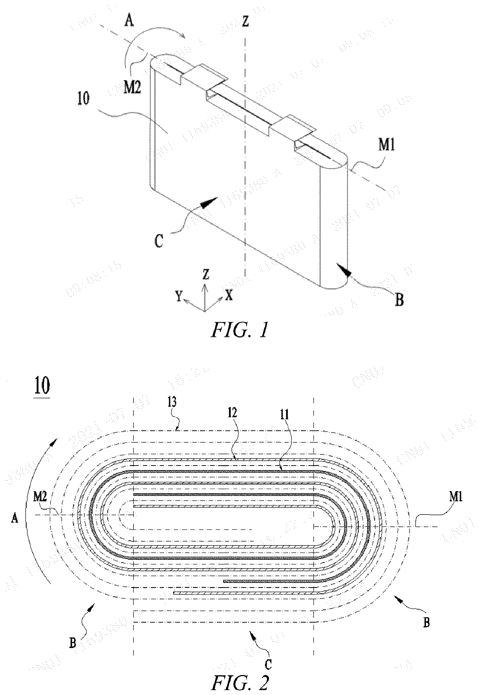

In order to make a lithium ion battery smaller in size and higher in energy density, a cathode plate, an anode plate and a separator in an electrode assembly of a lithium ion battery may be wound and then compacted. For example, as shown in Fig. 1, which is a schematic perspective structural diagram of an electrode assembly 10. The electrode assembly 10 comprises an anode plate, a cathode plate and a separator, wherein the anode plate, the cathode plate and the separator are stacked and then wound around a winding axis Z to form a wound structure. The separator is an insulating film in the prior art that is used to separate the anode plate from the cathode plate to prevent the anode plate and the cathode plate from being short-circuited. The wound structure of the electrode assembly is in a flat body shape, and a schematic structural diagram of a transverse cross-section of the electrode assembly in a direction perpendicular to the winding axis Z may be as shown in Fig. 2.

In conjunction with Figs. 1 and 2, the electrode assembly 10 comprises a flat region C and bent regions B located at two ends of the flat region C. The flat region C refers to a region in the wound structure having a parallel structure, that is, the anode plate 12, the cathode plate 11 and the separator 13 in the flat region C are substantially parallel to each other, that is, the surfaces of the anode plate 12, the cathode plate 11 and the separator 13 in each layer of the electrode assembly 10 in the flat region C are all flat surfaces. The bent region B refers to a region in the wound structure having a bent structure, that is, the anode plate 12, the cathode plate 11 and the separator 13 in the bent region B are all bent, that is, the surfaces of the anode plate 12, the cathode plate 11 and the separator 13 in each layer of the electrode assembly 10 in the bent region B are all curved surfaces. The bent region B has a bending direction A. The bending direction A can be understood as a direction pointing to the flat region along the surface of the electrode assembly in the bent region, for example, the bending direction A refers to a winding direction of the wound structure in the bent region B. The electrode assembly 10 has a center line M1 in the bent region B, and the center lines M1 and M2 are parallel to the direction the winding axis Z of the electrode assembly 10 and extend in a length direction Y of the electrode assembly 10 in Fig. 1. A width direction of the electrode assembly 10 is a direction X, and the winding axis is perpendicular to the length direction Y and the width direction X of the electrode assembly, and the length direction Y is perpendicular to the width direction X.

In one embodiment of this present application, it is possible to stack one separator 13 and one cathode plate 11, together with another separator 13 and one anode plate 12 that may be stacked and then wound or folded, or at least one (e.g., two or more) cathode plate(s) 11, at least one (e.g., two or more) anode plate(s) 12 and at least two separators (e.g., four or more separators, with the number of the separators being twice the number of the cathode plates or anode plates) are stacked and then wound or folded, and the bent region B is formed. When the electrode assembly has multiple layers of cathode plates 11, multiple layers of anode plates 12 and multiple layers of separators 13 in the bent region B, the bent region B comprises a structure in which the cathode plates 11, the separators 13 and the anode plates 12 are alternately distributed.

When the electrode assembly has the wound structure, the width direction of the cathode plate 11 and the anode plate 12 is parallel to the direction of the winding axis, and the width direction of the cathode plate 11 and the anode plate 12 is parallel to a direction perpendicular to the bending direction A; and when the electrode assembly does not have the wound structure, the width direction of the cathode plate 11 and the anode plate 12 is parallel to the direction perpendicular to the bending direction A. For the simplicity of the subsequent description, in this embodiment, the width direction of the cathode plate 11 and the anode plate 12, the direction perpendicular to the bending direction A, and the direction of the winding axis are collectively referred to as a direction Z.

The surface of the anode plate 12 has an anode active material layer made of an anode active material, and the surface of the cathode plate 11 has a cathode active material layer made of a cathode active material. For example, the cathode active material may be lithium manganate, lithium cobaltate, lithium-iron phosphate or lithium nickel-cobalt manganate, and the anode active material may be graphite or silicon.

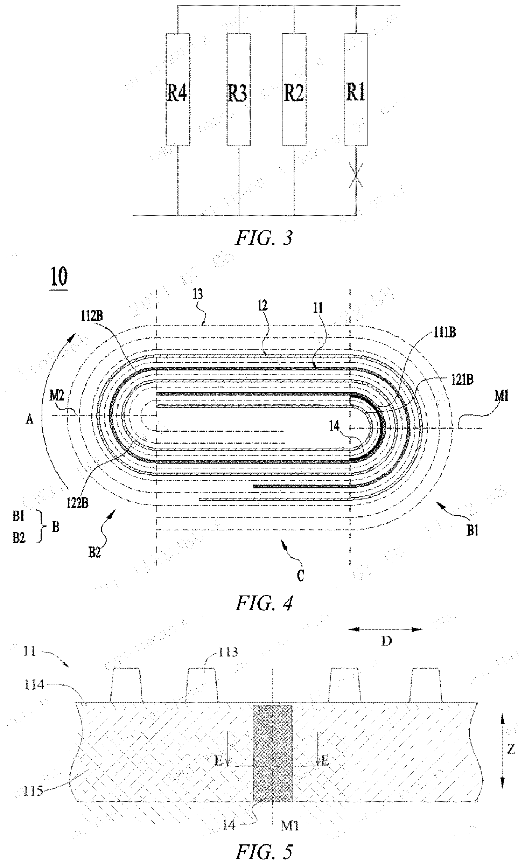

As shown in Fig. 3, during the research and development, the inventors found that the electrode assembly 10 is continuously expanded during the use of a battery cell, and the cathode plate 11 of the electrode assembly 10 is easily broken in the bent region B due to expansion and bending. Each layer of cathode plate 11 may be equivalent to an internal resistance R. The internal resistance of the cathode plate 11 is greater than that of the anode plate 12, and the resistance change of the cathode plate 11 has a greater influence on the internal resistance of the electrode assembly. The internal resistance of the cathode plate 11 may be approximately equivalent to the case where the resistances of each layer of cathode plate 11 are in parallel connection, and assuming that there are four turns of cathode plate 11, the equivalent internal resistances of all turns of cathode plate 11 from inside to outside are respectively represented by R1-R4, with a parallel structure being formed between R1-R4. In the parallel structure, the more the internal resistances in parallel connection, the smaller the internal resistance of the electrode assembly. If some of R1-R4 cannot be connected into a circuit, the total resistance of the parallel circuit will increase, causing resistance increase of the electrode assembly 10. If the equivalent internal resistance R1 of the cathode plate 11 cannot be connected into the circuit in parallel after the cathode plate 11 is broken in the bent region B, as shown in Fig. 3, the equivalent parallel resistances may be reduced, and thus the internal resistance of the electrode assembly 11 increases. The increase of the internal resistance of the electrode assembly 10 will result in an increase of the charging polarization of the battery cell, and the capacity of the battery cell will be reduced. In addition, the breakage of the cathode plate may result in the reduction of the effective mass of the cathode active material, the reduction of the effective mass of the cathode active material may also result in the reduction of the capacity of the battery cell and thus affect the capacity stability of the battery cell, and the reduction of the capacity of the battery cell may cause the capacity imbalance of the whole battery and deteriorate the service performance of the whole battery. The cases where the breakage of the cathode plate 11 results in an increase of the internal resistance include: 1. the case where the broken part of the cathode plate 11 is not provided with a tab, and the broken part after breakage cannot be electrically connected to a top cover; and 2. the case where the broken part of the cathode plate 11 is provided with a tab, but after welding the tab at the broken part is cracked or incompletely soldered, and the broken part still cannot be electrically connected to the top cover.

In view of this, as shown in Fig. 4, the present application provides an electrode assembly 10, comprising a cathode plate 11, an anode plate 12, a separator 13 and an electrically conductive layer 14. The separator 13 is used to separate the cathode plate 11 and the anode plate 12. The cathode plate 11, the separator 13 and the anode plate 12 are wound to form a bent region B. The electrically conductive layer 14 is configured such that at least a part of the electrically conductive layer 14 is provided on a surface of the cathode plate 11 in the bent region B, the cathode plate 11 comprises a covered region that is covered by the electrically conductive layer 14, and the electrically conductive layer 14 is in parallel connection with the covered region.

By means of providing the electrically conductive layer 14 on the surface of the cathode plate 11 in the bent region B and allowing the electrically conductive layer 14 to be in parallel connection with the covered region of the cathode plate 11, when the covered region of the cathode plate 11 in the bent region B is broken to cause the electrode assembly 10 to have a tendency to increase the internal resistance, the electrically conductive layer 14 can maintain the electrical connection between the broken cathode plates 11, and the equivalent internal resistances of the broken cathode plates 11 are connected into the circuit in parallel so as to suppress the increase of the internal resistance of the electrode assembly 10 and then reduce the capacity fade of the battery cell to maintain the capacity stability of the battery cell. In addition, the electrically conductive layer 14 may also provide reinforcement for the cathode plate 11 in the bent region B, reducing the probability of breakage of the cathode plate 11.

In the above embodiment, the separator 13 has electronic insulation and is used to separate the cathode plate 11 and the anode plate 12 adjacent to each other to prevent the cathode plate 11 and the anode plate 12 adjacent to each other from being short-circuited. The separator 13 has a large number of penetrating micropores to enable electrolyte ions to freely pass through, and has good permeability to lithium ions, so that the separator 13 substantially cannot block the lithium ions. For example, the separator 13 comprises a separator base layer and a functional layer located on a surface of the separator base layer. The separator base layer comprises at least one of polypropylene, polyethylene, an ethylene-propylene copolymer, polybutylene terephthalate, etc., and the functional layer may be a mixture layer of ceramic oxide and a binder.

In the above embodiment, the anode plate 12 comprises an anode main body portion and an anode tab portion extending outwards from the anode main body portion in the direction Z. At least a part of region in the surface of the anode main body portion in the direction Z is an anode active material region for coating an anode active material that may be graphite or silicon.

In another embodiment of the present application, not only is a part of region in the surface of the anode main body portion is provided with the anode active material region, but also the surface of the anode tab portion and the root region close to the anode main body portion are provided with anode active material regions. That is, a part of the region of the anode tab portion is an anode active material region.

In another embodiment of the present application, the anode active material region covers the entire surface of the anode main body portion in the direction Z.

In another embodiment of the present application, the cathode active material may not cover the entire surface of the cathode plate 11, for example, Fig. 5 shows a schematic structural diagram of a cathode plate unwound in an unwinding direction D of an electrode assembly according to an embodiment of the present application. The unwinding direction D is opposite to the winding direction A.

The cathode plate 11 comprises a cathode main body portion and at least one cathode tab portion 113 extending toward the outside of the cathode main body portion in the direction Z. At least a part of region of a surface of the cathode main body portion is a cathode active material region 115, and the cathode active material region 115 may be coated with a cathode active material, for example, the cathode active material may be a ternary material, lithium manganate or lithium iron phosphate.

In another embodiment of the present application, the surface of the cathode main body portion further comprises a first insulation layer coating region 114 adjacent to the cathode active material region 115, the first insulation layer coating region 114 is located on the side of the cathode active material region 115 adjacent to the cathode tab portion 113, and the first insulation layer coating region 114 is coated with an insulating material for insulation and isolation of the cathode active material region 115 and the cathode tab portion 113. Two surfaces of a current collector 102 of the cathode plate 11 have the cathode active material regions 115, and the cathode tab portion 113 is a part of the current collector 102 of the cathode plate 11, wherein the current collector 102 may be made of aluminum.

For example, the cathode active material region 115 and the first insulation layer coating region 114 are distributed at two ends on the surface of the cathode main body portion in a width direction (e.g., the direction Z) of the cathode main body portion, and the cathode tab portion 113 and the first insulation layer coating region 114 are located at the same end of the cathode main body portion.

In another embodiment of the present application, the cathode active material region 115 and the first insulation layer coating region 114 are two substantially parallel regions on the surface of the cathode main body portion, and are distributed in two layers on the surface of the cathode main body portion in the direction Z.

In another embodiment of the present application, the first insulation layer coating region 114 may be located at a portion where the cathode main body portion is interconnected to the cathode tab portion 113, for example, the portion of the first insulation layer coating region 114 located on the surface of the cathode main body portion and interconnected to the cathode tab portion 113, for separating the surface of the cathode tab portion 113 from the cathode active material region 115. In another embodiment of the present application, not only the surface of the cathode main body portion is provided with the first insulation layer coating region 114, but also the root region of the cathode tab portion 113 close to the cathode main body portion is provided with a second insulation layer coating region coated with an insulation layer.

In another embodiment of the present application, the surface of the first insulation layer coating region 114 is coated with an insulating material that comprises an inorganic filler and a binder. The inorganic filler includes one or more of boehmite, aluminum oxide, magnesium oxide, titanium oxide, zirconium oxide, silicon dioxide, silicon carbide, boron carbide, calcium carbonate, aluminum silicate, calcium silicate, potassium titanate, and barium sulfate. The binder includes one or more of polyvinylidene fluoride, polyacrylonitrile, polyacrylic acid, polyacrylate, polyacrylic acid-acrylate, polyacrylonitrile-acrylic acid, and polyacrylonitrile-acrylate.

In another embodiment of the present application, each cathode plate 11 may comprise one, two or more cathode tab portions 113. When the cathode plate 11 comprises two or more cathode tab portions 113, all the cathode tab portions 113 are located on the same side of the cathode plate 11 in the direction Z.

When the cathode plate 11 and the anode plate 12 are stacked on each other, two ends of the anode active material region of the anode plate in the direction Z both extend beyond the corresponding ends of the cathode active material region 115 of the adjacent cathode plate 11, so that the electrode assembly may have good energy density. For example, the two ends of the anode active material region in the direction Z are respectively a first end and a second end, and the two ends of the cathode active material region in the direction Z are respectively a third end and a fourth end, wherein the first end of the anode active material region and the third end of the cathode active material region 115 are located on the same side of the electrode assembly in the direction Z, with the first end of the anode active material region extending beyond the third end of the cathode active material region in the direction Z, and the second end of the anode active material region and the fourth end of the cathode active material region 115 are located on the other side of the electrode assembly in the direction Z, with the second end of the anode active material region extending beyond the fourth end of the cathode active material region 115 in the direction Z.

The two ends of the anode active material region along the winding axis Z may extend beyond the corresponding ends of the cathode active material region 115 by the same or different sizes, for example, by a size ranging from 0.2 millimeters to 5 millimeters.

In some embodiments, at least a part of the electrically conductive layer 14 is provided at a first-bend part 111B and/or a second-bend part 112B of the cathode plate 11 in the bent region B. During the use of the battery cell, the expansion of the anode plate 12 is greater than that of the cathode plate 11. Since the cathode plate 11 wraps the anode plate 12, the greater expansion of the anode plate 12 will cause the cathode plate 11 wrapped outside the anode plate 12 to receive excessive force, especially at the first-bend part 111B and the second-bend part 112B which have larger bending angles, and the cathode plate 11 is easily broken. The electrically conductive layer 14 is provided at the first-bend part 111B and/or the second-bend part 112B of the cathode plate 11 in the bent region B, and the electrically conductive layer 14 can further reinforce the first-bend part 111B and/or the second-bend part 112B of the cathode plate, reducing the occurrence of an increase of the internal resistance of the electrode assembly 10 due to the breakage of the covered region of the cathode plate 11 and thus improving the capacity stability of the battery cell. As shown in Fig. 4, the electrically conductive layer 14 is provided on the surface of a radially inner side of the first-bend part 111B of the cathode plate 11, and the electrically conductive layer 14 is located in the bent region B as a whole. In some embodiments, the electrically conductive layer 14 may cover all or a part of the cathode plate 11 in the bent region B, that is, the electrically conductive layer 14 may cover all or a part of the first-bend part 111B and/or the second-bend part 112B of the cathode plate 11 in the bent region B. In other embodiments, a part of the electrically conductive layer 14 is located in the bent region B, and the other part extends into the flat region C.

In this embodiment, the wound structure of the electrode assembly 10 comprises the flat region C and the bent region B. The bent region B comprises a first bent region B1 and a second bent region B2 located on two sides of the flat region C, wherein the flat region C is separated from the first bent region B1 and the second bent region B2 by means of a straight line and a dotted line, respectively.

The anode plate 12 and the cathode plate 11 of the electrode assembly included in the first bent region B1 and the second bent region B2 are alternately stacked in sequence, with the separator 13 being provided between the anode plate 12 and the cathode plate 11 adjacent to each other. The innermost electrode plate in the first bent region B1 and the second bent region B2 is the anode plate 12, and the inner side surfaces of at least the innermost cathode plate 11 in the first bent region B1 and the second bent region B2 are provided with the electrically conductive layer 14. For example, the inner side surface of each layer of cathode plate 11 in the first bent region B1 and the second bent region B2 is provided with the electrically conductive layer 14. In this embodiment, the radially inner side surface of the cathode plate 11 refers to the surface of the cathode plate 11 facing the winding axis, or the surface facing the interior of the wound structure.

For example, the first bent region B1 has multiple layers of electrode plate, for example, five layers of electrode plate, the anode plates 12 and the cathode plates 11 in the first bent region B1 are alternately stacked in sequence along the wound structure from inside to outside, the innermost electrode plate in the first bent region B1 is the first-bend part 121B of the anode plate 12, the radially outer side thereof is the first-bend part 111B of the cathode plate 11, and the electrically conductive layer 14 is attached to the inner side surface of the first-bend part 111B of the cathode plate 11 in the first bent region B1.

The second bent region B2 has multiple layers of electrode plate, for example, three layers of electrode plate, the electrode plate of the innermost layer (which may also be referred to as a first layer) and the outermost layer (which may also be referred to as a third layer) in the second bent region B2 are both the anode plate 12, the electrode plate between the innermost layer of electrode plate and the outermost layer of electrode plate (which may also be referred to as a second layer of electrode plate) are the cathode plate 11, and the second-bend part 122B of the anode plate 12 is the innermost electrode plate in the first bent region B1, and the radially outer side thereof is the second-bend part 112B of the cathode plate 11.

In some embodiments, the electrically conductive layer 14 may be of a single-layer structure, and the material of the electrically conductive layer 14 includes a metal-based electrically conductive material such as silver, gold, nickel, copper or aluminum, or a non-metal-based electrically conductive material such as polypyrrole, polyphenylene sulfide, polyphthalocyanine compound, polyaniline or polythiophene, or a mixture of one or more of the above materials. The electrically conductive layer may also be made of other electrically conductive materials.

The electrically conductive layer 14 may be electrically connected to the cathode plate 11 in a bonding manner by means of an electrically conductive adhesive that may be metal-based electrically conductive paste such as silver, gold, nickel, copper or aluminum paste, or non-metal-based electrically conductive paste such as polypyrrole, polyphenylene sulfide, polyphthalocyanine compound, polyaniline or polythiophene paste, or a mixture of one or more of the above materials.

In some embodiments, one or both surfaces of the cathode plate 11 are provided with the electrically conductive layer 14. By means of providing the electrically conductive layer 14 on one or both surfaces of the cathode plate 11, it is possible to more effectively suppress the increase of the internal resistance of the electrode assembly due to breakage of the cathode plate 11 in the bent region B, and provide reinforcement for the cathode plate 11 in the bent region B to reduce the breakage of the covered region of the cathode plate. One or both surfaces of the cathode plate 11 refer to the surfaces of the cathode plate 11 on the inner side and/or the outer side in the radial direction of winding. As shown in Fig. 4, the electrically conductive layer 14 is provided on the surface on the inner side of the cathode plate 11 in the radial direction. When the anode plate 12 expands, the radially inner side surface of the cathode plate 11 receives a pressing force, while the outer side surface of the cathode plate 11 receives a tightening force, the tightening force on the outer side surface being greater than the pressing force on the inner side surface. Providing the electrically conductive layer 14 on the inner side of the cathode plate 11 in the radial direction can reduce the force applied to the electrically conductive layer 14, which can reduce the risk of failure of the electrically conductive layer 14. Also, providing the electrically conductive layer 14 on both the inner side and the outer side of the cathode plate 11 can provide better reinforcement for the cathode plate 11 in the bent region B. In addition, when the cathode plate 11 in the bent region B is broken, the electrically conductive layer 14 on the two surfaces can provide a smoother electric conduction path, suppressing the increase of the internal resistance of the electrode assembly 10.

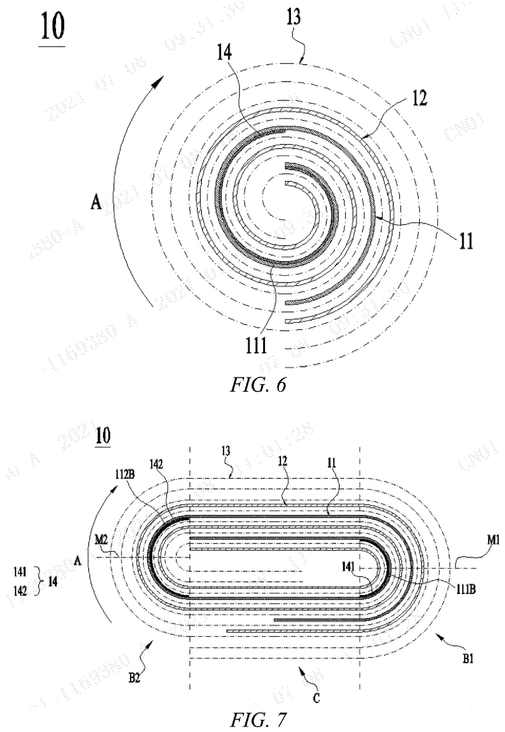

As shown in Fig. 6, in some embodiments, the electrode assembly 10 is an electrode assembly of a cylindrical battery. In this embodiment, the first-bend part 111B of the cathode plate 11 refers to a first turn of the cathode plate 11 from inside to outside in the radial direction; and the second-bend part refers to a second turn of the cathode plate 11 from inside to outside in the radial direction, and so on. Providing the electrically conductive layer 14 at the first-bend part 111B means that the electrically conductive layer is provided on the first turn of the cathode plate from inside to outside in the radial direction.

As shown in Fig. 7, in another embodiment of the present application, the radially inner surface of the first-bend part 111B of the cathode plate 11 is provided with an electrically conductive layer 141, and the radially inner surface of the second-bend part 112B is provided with an electrically conductive layer 142. Since the wound structure of the electrode assembly has two bent regions B1 and B2, both of the bent regions B1 and B2 receive an expansion force during expansion. The cathode plate 11 is provided with the electrically conductive layer on both the bending parts 111B and 112B, so that the two bent regions B1 and B2 are uniformly stressed.

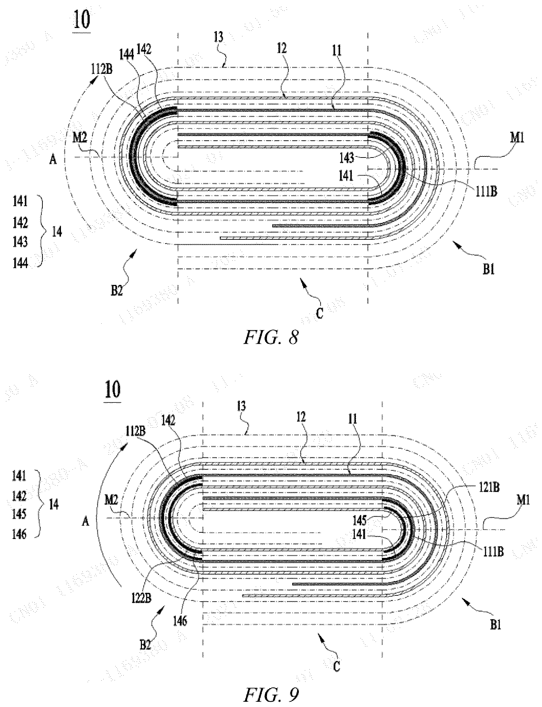

As shown in Fig. 8, in another embodiment of the present application, the radially inner surface of the first-bend part 111B of the cathode plate 11 is provided with the electrically conductive layer 141, and the radially outer surface of the first-bend part 111B of the cathode plate 11 is provided with the electrically conductive layer 143; and the radially inner surface of the second-bend part 112B of the cathode plate 11 is provided with an electrically conductive layer 142, and the radially outer surface of the first-bend part 111B of the cathode plate 11 is provided with an electrically conductive layer 144. Also, the two surfaces on the inner side and the outer side of the cathode plate 11 are both provided with the electrically conductive layer 14, so as to provide better reinforcement for the cathode plate 11 in the bent region B. In addition, when the cathode plate 11 in the bent region B is broken, the electrically conductive layer 14 on the two surfaces on the inner side and the outer side can provide a smoother electric conduction path, suppressing the increase of the internal resistance of the electrode assembly 10.

As shown in Fig. 9, in some embodiments, the electrically conductive layer 14 is further provided at a first-bend part 121B of the anode plate 12 and/or a second-bend part 121B of the anode plate 12 in the bent region B, and is in parallel connection with the anode plate 12. During the use of the battery cell, the anode plate 12 expands, and the first-bend part 121B and the second-bend part 122B of the anode plate 12 in the bent region B have larger bending angles, and affected by the expansion force, the anode active material layers at the first-bend part 121B and the second-bend part 122B of the anode plate 12 are easily broken or shed, or the anode plate 12 is broken. By providing the electrically conductive layer 14 at the first-bend part 121B and the second-bend part 122B of the anode plate 12 in the bent region B, the electrically conductive layer 14 can further reinforce the first-bend part 12B and the second-bend part 122B of the anode plate 12, reducing the occurrence of breakage or shedding of the anode active material layer due to bending of the anode plate 12, or the occurrence of breakage of the anode plate 12. If the anode active material layers are broken or shed, lithium precipitation may occur due to an insufficient lithium intercalation space of the anode plate 12 during charging, and the electrically conductive layer 14 can reduce the occurrence of breakage or shedding of the anode active material layer due to bending of the anode plate 12, thereby reducing lithium precipitation. If the anode plate 12 is broken, and the broken portion of the anode plate 12 is not electrically conductive and lacks a receiving site, lithium precipitation will also occur. The electrically conductive layer 14 is in parallel connection with the anode plate 12, and after the anode plate 12 is broken, the broken portion of the anode plate 12 can be maintained to be electrically conductive, which reduces lithium precipitation and also provides reinforcement for the anode plate to reduce the occurrence of breakage. In some embodiments, providing the electrically conductive layer 14 on the surface of the anode plate 12 adjacent to the cathode plate 11 may reduce the occurrence of lithium precipitation.

As shown in Fig. 9, in some embodiments of the present application, the radially inner surface of the first-bend part 111B of the cathode plate 11 is provided with the electrically conductive layer 141, and the radially inner surface of the second-bend part 112B of the cathode plate 11 is provided with the electrically conductive layer 142; and the radially outer surface of the first-bend part 121B of the anode plate 12 is provided with an electrically conductive layer 145, and the radially outer surface of the second-bend part 122B of the anode plate 12 is provided with an electrically conductive layer 146.

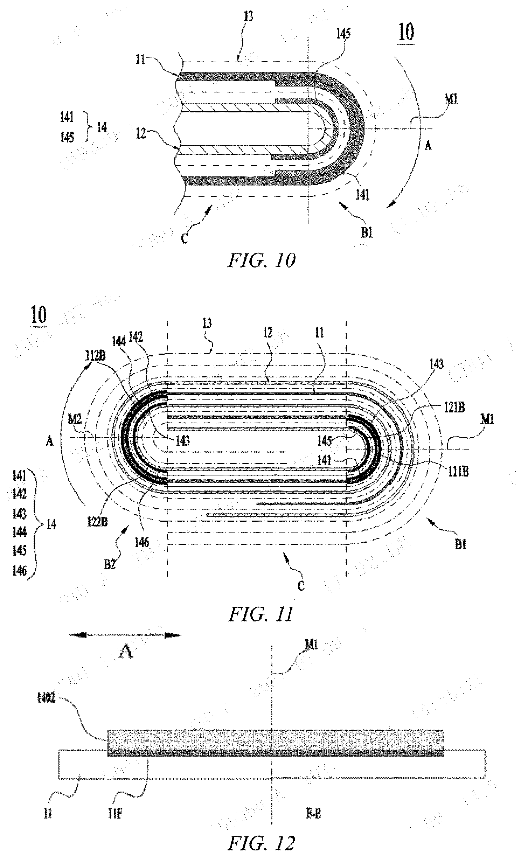

As shown in Fig. 10, in some embodiments, a part of the electrically conductive layer 14 is located in the bent region B, and the other part extends into the flat region C. Specifically, the electrically conductive layer 145 provided on the radially outer surface of the first-bend part 121B of the anode plate 12 and the electrically conductive layer 141 provided on the radially inner surface of the first-bend part 111B of the cathode plate 11 are both provided such that a part thereof is located in the bent region B and the other part thereof extends into the flat region C, so that the electrically conductive layer 14 has larger area in the bent region B as much as possible.

In another embodiment of the present application, two ends of the electrically conductive layer 14 extending in the bending direction A are both located in the bent region B, that is, all the electrically conductive layer 14 is located in the bent region B. In this embodiment, the electrode assembly further comprises the flat region C connected to the bent region B, the bending direction A refers to a direction along the curved surface of the bent region B and pointing to the flat region C, and the direction perpendicular to the bending direction A refers to a direction perpendicular to the bending direction A.

In another embodiment of the present application, the end of the electrically conductive layer 14 extending in the bending direction A is located in the flat region C, and the other end is located in the bent region B.

In another embodiment of the present application, the two ends of the electrically conductive layer 14 extending in the bending direction A are both located at the junction of the bent region B and the flat region C, or the two ends of the electrically conductive layer 14 extending in the bending direction A are both close to the junction of the bent region B and the flat region C.

As shown in Fig. 11, in another embodiment of the present application, the inner surface and the outer surface of the cathode plate 11 as well as the anode plate 12 are all provided with the electrically conductive layer 4. The radially inner surface of the first-bend part 111B of the cathode plate 11 is provided with an electrically conductive layer 141, and the radially inner surface of the second-bend part 112B of the cathode plate 11 is provided with an electrically conductive layer 142; the radially outer surface of the first-bend part 111B of the cathode plate 11 is provided with an electrically conductive layer 143, and the radially outer surface of the second-bend part 112B of the cathode plate 11 is provided with an electrically conductive layer 144; and the radially outer surface of the first-bend part 121B of the anode plate 12 is provided with an electrically conductive layer 145, and the radially outer surface of the second-bend part 122B of the anode plate 12 is provided with an electrically conductive layer 146.

The structures of the electrically conductive layer 14 in the embodiments of Figs. 4 and 6-11 are not limited to applying to the first-bend part or the second-bend part of the cathode plate or the anode plate, and may also be applied to a third-bend part or above. The structures of the electrically conductive layer 14 in the embodiments of Figs. 4 and 6-11 may also be combined with each other.

The structure of the electrically conductive layer 14 will be described below in conjunction with the drawings, and the electrically conductive layer 14 provided at the first bent region B1 is taken as an example for description. However, the structure of the electrically conductive layer 14 in the following embodiment is not limited to being provided at the first bent region B1, and may also be applied to the second bent region B1 or other parts, as well as the electrically conductive layer on the anode plate.

As shown in Fig. 12, which is a schematic structural diagram of a cross-section in a direction E-E in Fig. 5, the electrically conductive layer 14 comprises an electrically conductive base layer 1402. The electrically conductive base layer 1402 is in parallel connection with the cathode plate 12 in the bent region.

In any embodiment of the present application, the material of the electrically conductive base layer 1402 may include a metal-based electrically conductive material such as silver, gold, nickel, copper or aluminum, or a non-metal-based electrically conductive material such as polypyrrole, polyphenylene sulfide, polyphthalocyanine compound, polyaniline or polythiophene, or a mixture of one or more of the above materials. The electrically conductive layer 14 may also be made of other electrically conductive materials. The electrically conductive base layer 1402 reinforces the cathode plate 11 to reduce the occurrence of increase of the internal resistance of the electrode assembly 10 due to breakage of the cathode plate 11 and thus improve the capacity stability of the battery cell.

The electrically conductive base layer 1402 may be electrically connected to the cathode plate 11 in a bonding manner by means of an electrically conductive adhesive. In any embodiment of the present application, the electrically conductive adhesive may be metal-based electrically conductive paste such as silver, gold, nickel, copper or aluminum paste, or non-metal-based electrically conductive paste such as polypyrrole, polyphenylene sulfide, polyphthalocyanine compound, polyaniline or polythiophene paste, or a mixture of one or more of the above materials.

In conjunction with Fig. 5, the electrically conductive base layer 1402 is electrically connected to the cathode active material region 115 of the cathode plate 11.

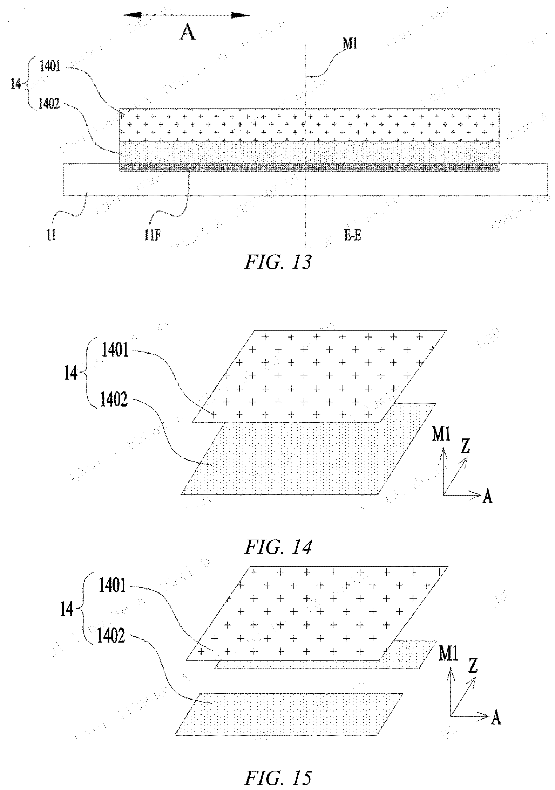

As shown in Fig. 13, in the bent region B, the entire surface of the side of the electrically conductive base layer 1402 adjacent to the cathode plate 11 is electrically connected to the covered region 11F of the cathode plate 11, and the center line M1 of the bent region B passes through the electrically conductive base layer 14 in the winding direction of the electrode assembly 10. The cathode plate 11 has a large bending angle at the center line M1 of the bent region B1, and has high possibility of breakage. The center line M1 of the bent region B1 passes through the electrically conductive base layer 14 in the winding direction A of the electrode assembly 10. When the cathode plate 11 is broken near the center line M1, the electrically conductive base layer 14 can cover the broken part of the cathode plate 11, and since the entire surface of the side of the electrically conductive base layer 14 adjacent to the cathode plate 11 is electrically connected to the cathode plate 11, the two broken portions of the cathode plate 11 may still remain electrically connected to each other by means of the electrically conductive base layer 14 so as to suppress the increase of the internal resistance of the electrode assembly 10.

In another embodiment as shown in Fig. 13, the electrically conductive layer 14 further comprises an ion barrier layer 1401. The ion barrier layer 1401 is provided on the side of the electrically conductive base layer 1402 away from the cathode plate 11 and covers the electrically conductive base layer 1402, and the ion barrier layer 1401 is used to block at least some of ions from escaping from the cathode plate 11 located on one side of the ion barrier layer 1401. During charging, the electrically conductive base layer 1402 may block some of ions from escaping from the active material region 115 of the cathode plate 11, but some ions may still diffuse outwards from an edge of the electrically conductive base layer 1402. The ion barrier layer 1401 covers the side of the electrically conductive base layer 1402 away from the cathode plate 11, and may block some of ions from escaping from the cathode active material region 115 of the cathode plate 11 located on one side of the ion barrier layer 1401 and being intercalated into the anode plate 12 adjacent to the cathode plate 11. The ion barrier layer 1401 mainly blocks the ions diffused from the edge of the electrically conductive base layer 1402 from being intercalated into the anode plate 12 adjacent to the cathode plate 11, which can reduce the lithium precipitation in the anode plate 12 in the bent region B.

Fig. 14 shows an exploded view of the electrically conductive layer 14 in Fig. 13 according to an embodiment. In this embodiment, the ion barrier layer 1401 has an area greater than or equal to that of the electrically conductive base layer 1402 and covers the edge of the electrically conductive base layer 1402.

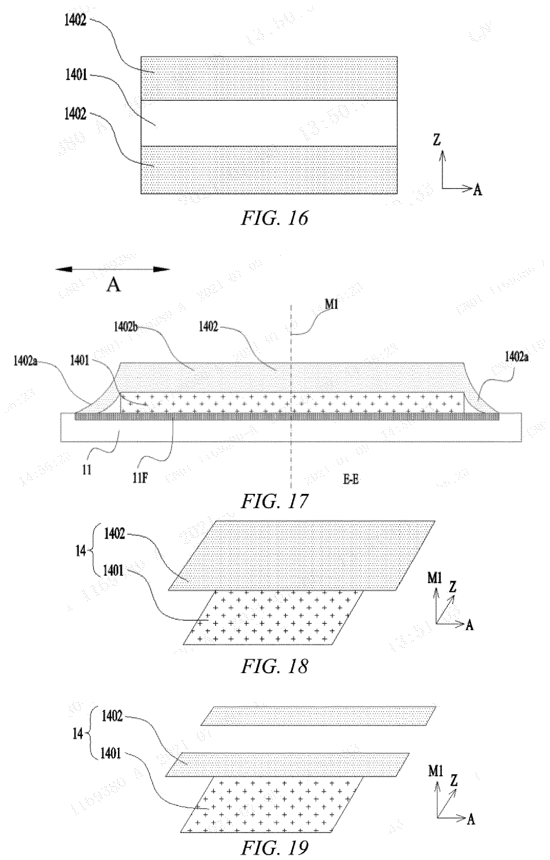

Fig. 15 shows an exploded view of the electrically conductive layer 14 in Fig. 13 according to another embodiment. Fig. 16 is a plan view of the electrically conductive layer 14 in Fig. 15 in a combined state. This embodiment is different from the embodiment in Fig. 14 in that a plurality of electrically conductive base layer 1402 are provided, the plurality of electrically conductive base layers 1402 are arranged at intervals in a direction parallel to the winding axis Z of the electrode assembly 10, and each electrically conductive base layer 1402 is in parallel connection with the covered region 11F of the corresponding cathode plate 11 that is covered by the electrically conductive base layer 1402. In this embodiment, compared with the electrically conductive base layer 1402 in Fig. 14 that is an integral body, a plurality of electrically conductive base layers 1402 are arranged at intervals. Since the electrode assembly may receive different forces at different positions, the electrically conductive base layers 1402 are separated at intervals, the electrically conductive base layer 1402 located at the position, where the electrode assembly receives larger force, receives larger force, while the electrically conductive base layer 1402 receives smaller force at other positions, which will disperse the force received by the electrically conductive base layers 1402 to reduce the possibility of breakage of the electrically conductive base layers 1402. In addition, on the basis of ensuring the electric conduction effect, the space occupied by the electrically conductive base layer 1402 can be reduced, and the energy density of the battery cell can be increased.

As shown in Fig. 17, in other embodiments, the electrically conductive base layer 1402 comprises, in the bent region B and in the winding direction A of the electrode assembly 10, two end portions 1402a located on two sides of the center line M1 of the bent region B, and the two end portions 1402a are electrically connected to the covered region 11F of the cathode plate 11.

In this embodiment, the cathode plate 11 has a large bending angle at the center line M1 of the bent region B, and has high possibility of breakage. The center line M1 of the bent region B passes through the electrically conductive base layer 1402 in the winding direction of the electrode assembly 10. When the cathode plate 11 is broken near the center line, the electrically conductive base layer 1402 can cover the broken part of the cathode plate 11. Since the two end portions of the electrically conductive base layer 1402 located on two sides of the center line M1 of the bent region B are respectively electrically connected to the covered region 11F of the cathode plate 11, the two broken portions of the cathode plate 11 may still remain electrically connected to each other by means of the electrically conductive base layer 1402 so as to suppress the increase of the internal resistance of the electrode assembly 10.

In this embodiment, the electrically conductive base layer 1402 further comprises a main body portion 1402b. The main body portion 1402b is connected to the two end portions 1402a. The electrically conductive layer 14 further comprises an ion barrier layer 1401. The ion barrier layer 1401 is provided between the main body portion 1402b of the electrically conductive base layer 1402 and the cathode plate 11, and the ion barrier layer 1401 is used to block at least some of ions from escaping from the cathode plate 11 located on one side of the ion barrier layer 1401.

In this embodiment, the ion barrier layer 1401 is provided between the main body portion 1402b of the electrically conductive base layer 1402 and the cathode plate 11, and the ion barrier layer 1401 is attached to the surface of the cathode plate 11 and directly covers the cathode active material region 115 of the cathode plate 11, which can better block some of the ions from escaping from the cathode plate 11 and being intercalated into the adjacent anode plate 12 so as to reduce lithium precipitation of the anode plate 12 in the bent region.

Fig. 18 shows an exploded view of the electrically conductive layer 14 in Fig. 17 according to an embodiment. In this embodiment, the length of the ion barrier layer 1401 is less than that of the electrically conductive base layer 1402 in the winding direction, the two end portions of the electrically conductive base layer 1402 extending beyond the ion barrier layer 1401 form end portions 1402a electrically connected to the cathode plate 11, and the portion between the two end portions 1402a forms the main body portion 1402b.

Fig. 19 shows an exploded view of the electrically conductive layer 14 in Fig. 17 according to another embodiment. This embodiment is different from the embodiment in Fig. 17 in that a plurality of electrically conductive base layers 1402 are provided, the plurality of electrically conductive base layers 1402 are arranged at intervals in a direction parallel to the winding axis Z of the electrode assembly 10, and each electrically conductive base layer 1402 is in parallel connection with the covered region 11F of the corresponding cathode plate 11 that is covered by the electrically conductive base layer 1402. Specifically, the two end portions 1402a of each electrically conductive base layer 1402 are electrically connected to the covered region 11F of the corresponding cathode plate 11 that is covered by the electrically conductive base layer 1402. In this embodiment, compared with the electrically conductive base layer 1402 in Fig. 17 that is an integral body, the plurality of electrically conductive base layers 1402 are arranged at intervals, which can reduce the space occupied by the electrically conductive base layer 1402 and increase the energy density of the battery cell on the basis of ensuring the electric conduction effect. Also, when one or more of the corresponding covered regions 11F in the plurality of electrically conductive base layers 1402 are broken, the broken electrode plates may still remain electrically connected to each other for better reliability as long as at least one of the electrically conductive base layers 1402 remains electrically conductive.

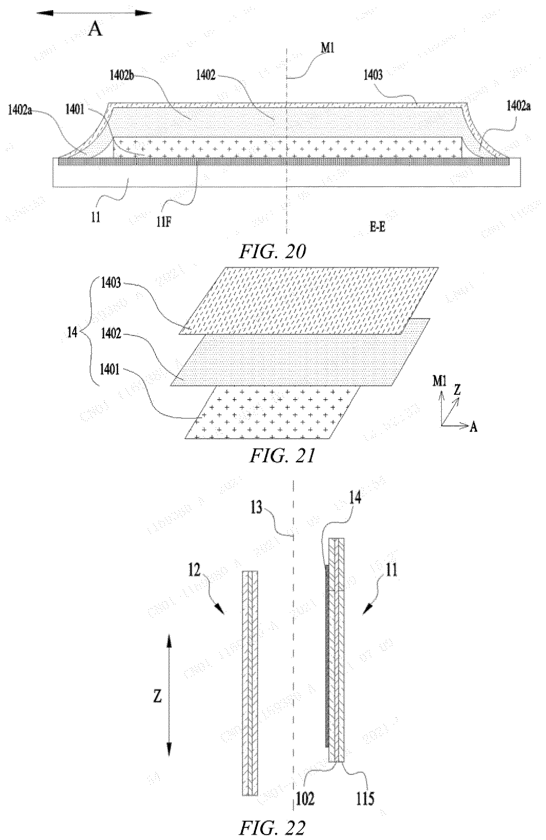

Fig. 20 shows the structure of an electrically conductive layer 14 according to another embodiment, which is different from the embodiment in Fig. 17 in that the electrically conductive layer 14 further comprises an insulation layer 1403. The insulation layer 1403 is provided on the side of the electrically conductive base layer 1402 away from the cathode plate 11 and covers the electrically conductive base layer 1402. In this embodiment, the side of the electrically conductive base layer 1402 away from the cathode plate 11 is provided with the insulation layer 1403, the insulation layer 1403 covers the electrically conductive base layer 1402, and when the separator 13 in the bent region B is broken, the insulation layer 1403 can prevent the cathode plate 11 and the anode plate 12 from being short-circuited due to direct contact between the electrically conductive base layer 1402 and the anode plate 12. In this embodiment, the insulation layer 1403 has an area greater than or equal to that of the electrically conductive base layer 1402 and covers the edge of the electrically conductive base layer 1402.

Fig. 21 shows, on the basis of the embodiment of Fig. 18, a structure in which the side of the electrically conductive base layer 1402 away from the cathode plate 11 is provided with an insulation layer 1403. In some embodiments not shown, an insulation layer may also be provided on the side of the electrically conductive base layer 1402 away from the cathode plate 11, on the basis of the embodiment of Fig. 19.

In any embodiment of the present application, the material of the ion barrier layer 1402 includes at least one of magnesium oxide, calcium oxide, boehmite, wollastonite, barium sulfate, calcium sulfate, calcium carbonate, aluminum oxide, silicon dioxide, polyethylene, polyvinyl chloride, polyacrylic acid/acrylate, butyl benzene, phenylanine, an ethylene-vinyl acetate copolymer, polypropylene, polyvinylidene fluoride, carboxymethyl cellulose, epoxy adhesive, silicone, polyurethane adhesive, styrene-isoprene-styrene copolymer adhesive, and modified materials thereof.

In any embodiment of the present application, the material of the insulation layer 1403 is selected from one of an organic polymer insulating material, an inorganic insulating material and a composite material. The material of the insulation layer is selected from an organic polymer insulating material that is selected from at least one of polyamide, polyterephthalate, polyimide, polyethylene, polypropylene, polystyrene, polyvinyl chloride, acrylonitrile-butadiene-styrene copolymer, polybutylene terephthalate, poly-p-phenylene terephthalamide, epoxy resin, polyoxymethylene, phenolic resin, polystyrene, polytetrafluoroethylene, silicone rubber, polyvinylidene fluoride, polycarbonate, aramid, polyphenylene phthamide, cellulose and derivatives thereof, starch and derivatives thereof, protein and derivatives thereof, polyvinyl alcohol and cross-linked polymers thereof, and polyethylene glycol and cross-linked polymers thereof. In any embodiment of the present application, the composite material is composed of an organic polymer insulating material and an inorganic insulating material. In some embodiments, the composite material is selected from at least one of an epoxy glass fiber reinforced composite material, and a polyester resin glass fiber reinforced composite material. In any embodiment of the present application, the inorganic insulating material is selected from at least one of aluminum oxide, silicon carbide and silicon dioxide.

Fig. 22 shows a schematic structural diagram of a cross-section at the position M1 in the direction of the winding axis Z of an embodiment in Fig. 4, with an electrically conductive layer 14 being arranged on the surface of the cathode plate 11 in the direction of the winding axis Z of the electrode assembly.

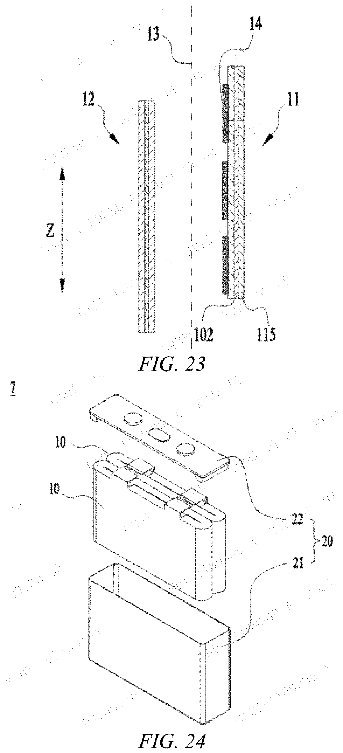

Fig. 23 shows a schematic structural diagram of a cross-section at the position M1 in the direction of the winding axis Z of another embodiment in Fig. 4, which is different from the embodiment of Fig. 22 in that a plurality of electrically conductive layers 14 are arranged on the surface of the cathode plate 11 in the direction of the winding axis Z of the electrode assembly, and the plurality of electrically conductive layers 14 are arranged at intervals in the direction of the winding axis Z of the electrode assembly, and each electrically conductive layer 14 is in parallel connection with the covered region 11F of the corresponding cathode plate 11. Since the electrode assembly may receive different forces at different positions, the electrically conductive layers 14 are separated at intervals, and the electrically conductive layer 14 located at the position, where the electrode assembly receives larger force, receives larger force while the electrically conductive layers 14 at other positions receives smaller force, which will disperse the force received by the electrically conductive layers 14 to reduce the possibility of breakage of the electrically conductive layers 14. In addition, on the basis of ensuring the electric conduction effect, the space occupied by the electrically conductive layers 14 can be reduced, and the energy density of the battery cell can be increased. The electrically conductive layers 14 of the embodiments in Figs. 22 and 23 may use the structures of the electrically conductive layer 14 of the embodiments in Figs. 12-21.

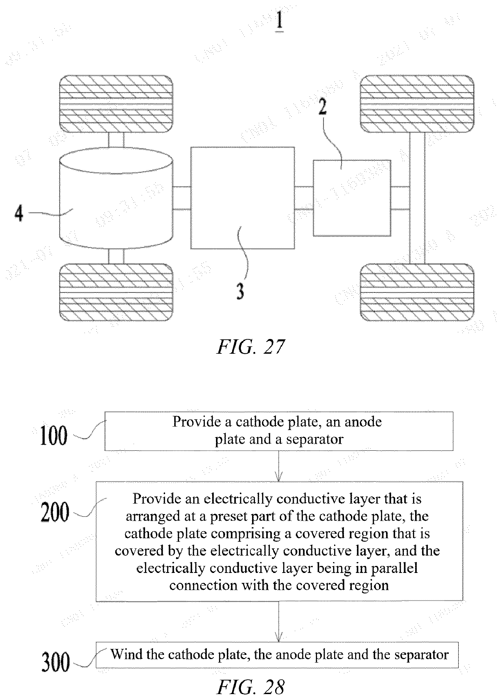

In some embodiments, the total current passing area of the electrically conductive base layer 1402 is greater than or equal to 1/3 of the current passing area of the current collector 102 of the connected cathode plate 11 to prevent the electrically conductive base layer 1402 from shedding from the cathode plate caused by a rise of temperature of the electrically conductive base layer 1402 due to a current passing area of the electrically conductive base layer being too small, thus ensuring the safe use. As shown in the embodiment of Fig. 15 or 19, when one electrically conductive layer comprises a plurality of electrically conductive base layers 1402 arranged side by side, the total current passing area of the electrically conductive base layers refers to the sum of the current passing areas of the plurality of electrically conductive base layers 1402. As shown in Fig. 23, when the electrically conductive layer 14 comprises a plurality of electrically conductive layers 14 arranged side by side, the total current passing area of the electrically conductive base layer 1402 refers to the sum of the current passing areas of the electrically conductive base layers 1402 of all of the electrically conductive layers 14. The current passing area of each electrically conductive base layer 1402 is the transverse cross-sectional area of the electrically conductive base layer 1402 in the direction of the winding axis Z of the electrode assembly 10. As shown in Fig. 28, when the two surfaces of the cathode plate are provided with the electrically conductive layers 14, the total current passing area of the electrically conductive base layers 1402 is equal to the sum of the current passing areas of the electrically conductive base layers 1402 of the electrically conductive layers 141 and 143 on the two surfaces. The current passing area of the current collector 102 of the cathode plate 11 is the transverse cross-sectional area of the current collector 102 in the direction of the winding axis Z of the electrode assembly 10.

The embodiments of Figs. 12 to 23 merely generally describe the positional relationship between the electrically conductive layers 14 and the cathode plate 11 and the structural characteristics of the electrically conductive layers 14. The electrically conductive layers of Figs. 12 to 23 are not limited to being provided on the cathode plate 11, and may also be provided on the anode plate 12. The structures of the electrically conductive layers 14 in the embodiments of Figs. 12 to 23 can be applied alone or in combination in the structure of the electrode assembly 10 in any one of the embodiments of Figs. 4-11.

Fig. 24 shows a schematic structural diagram of a battery cell according to another embodiment of the present application. The battery cell comprises a housing 20 and one or more electrode assemblies 10 received in the housing 20. The housing 20 comprises a shell 21 and a cover plate 22, the shell 21 having a receiving cavity and the shell 21 has an opening, that is, this flat surface does not have a shell wall to make the interior of the shell 21in communicated with the outside so that the electrode assemblies 10 can be received in the receiving cavity of the shell 21, the cover plate 22 is combined with the shell 21 at the opening of the shell 21 to form a hollow cavity, and after the electrode assemblies 10 are received in the housing 20, the housing 20 is internally filled with an electrolyte and sealed.

The shell 21 is shaped according to the shape of one or more electrode assemblies 10 after combination. For example, the shell 21 may be a hollow cuboid, a hollow cube or a hollow cylinder. For example, when the shell 21 is a hollow cuboid or cube, one of the flat surfaces of the shell 21 is a flat surface in which an opening is located, that is, this flat surface is not provided with a shell wall that allows the interior of the shell 21 to be in communication with the outside; and when the shell 21 is a hollow cylinder, one of circular side surfaces of the shell 21 is a surface in which an opening is located, that is, this circular side surface does not have a shell wall that allows the interior of the shell 21 to be in communication with the outside.

In another embodiment of the present application, the shell 21 may be made of an electrically conductive metal or plastic, and optionally, the shell 21 is made of aluminum or aluminum alloy.

The structure of the electrode assembly 10 may refer to the related content of the electrode assembly described in the forgoing embodiments of Figs. 4-23, which will not be described in detail herein.

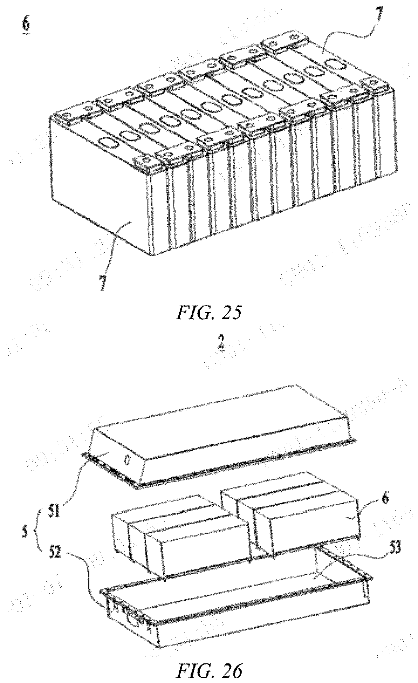

As shown in Fig. 25, it is a schematic structural diagram of a battery module according to another embodiment of the present application. The battery module 6 comprises a plurality of battery cells 7 connected to each other, wherein the plurality of battery cells 7 may be in series connection, in parallel connection or in series-parallel connection. The series-parallel connection means that the connection includes both series connection and parallel connection. The structure of the battery cell 7 may refer to the battery cell described in the embodiment corresponding to Fig. 24, which will not be described in detail herein.

Fig. 26 is a schematic structural diagram of a battery according to another embodiment of the present application. The battery 2 comprise a case 5, with a plurality of battery cells 7 received in the case 5. The structure of the battery cell 7 may refer to the structure of the battery cell 7 shown in Fig. 25. The specific manner of receiving the plurality of battery cells 7 in the case 5 may comprise: directly mounting the battery cells 7 in the case 5, or assembling a plurality of battery cells 7 into a battery module and then mounting the battery module in the battery 2.

As shown in Fig. 26, in some embodiments, the battery 2 comprises a plurality of battery modules 6 and a case 5. The case comprises a lower case 52 and an upper case 51. The plurality of battery modules 6 may be in series connection or in parallel connection or in series-parallel connection. The lower case 52 has a receiving cavity, and the lower case 52 has an opening, so that the plurality of battery modules 6 after being connected can be received in the receiving cavity of the lower case 52. The upper case 51 and the lower case 52 are combined at the opening of the lower case 52 to form a hollow cavity, and the upper case 51 and the lower case 52 are combined and then sealed.

In another embodiment of the present application, the battery may supply power to a power consuming device alone, and may be referred to as a battery pack, for example, for supplying power to a vehicle.

In another embodiment of the present application, according to the power requirements of the power consuming device, a plurality of batteries are connected to each other and then combined into a battery pack for supplying power to the power consuming device. In another embodiment of the present application, the battery pack may also be received in one case and packaged.

For the sake of brevity, the following embodiment is described by taking a power consuming device that comprises a battery as an example.

An embodiment of the present application further provides a power consuming device which, for example, may be a vehicle, for example, a new energy vehicle. The power consuming device comprises a battery as described in the foregoing embodiment, wherein the battery used by the power consuming device may be a battery as described in the embodiment corresponding to Fig. 26, which will not be described in detail herein.

For example, Fig. 27 shows a schematic structural diagram of a power consuming device according to another embodiment of the present application. The power consuming device may be a vehicle. The vehicle 1 may be a fuel vehicle, a gas vehicle or a new energy vehicle. The new-energy vehicle may be a battery electric vehicle, a hybrid vehicle, an extended-range vehicle, etc. The vehicle comprises a battery 3, a controller 2 and a motor 4. The battery 3 is used to supply power to the controller 2 and the motor 4 as an operation power source and driving power source of the vehicle 1. For example, the battery 3 is used to meet the working power consuming demands of a vehicle during startup, navigation and operation. For example, the battery 3 supplies power to the controller 2, the controller 2 controls the battery 3 to supply power to the motor 4, and the motor 4 receives and uses the power from the battery 3 as a driving power source for the vehicle 1, instead of or partially instead of fuel or natural gas, to provide driving power for the vehicle.

Fig. 28 shows a schematic flow diagram of a processing method for an electrode assembly according to another embodiment of the present application. The processing method comprises:
step 100 of providing a cathode plate, an anode plate and a separator;
step 200 of providing an electrically conductive layer that is arranged at a preset part of the cathode plate, the cathode plate comprising a covered region that is covered by the electrically conductive layer, and the electrically conductive layer being in parallel connection with the covered region; and
step 300 of winding the cathode plate, the anode plate and the separator, so that the cathode plate, the separator and the anode plate are wound to form a bent region, the preset part being configured such that at least a part of the electrically conductive layer is located in the bent region after winding.

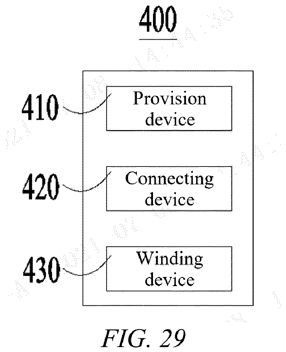

Fig. 29 shows a schematic structural diagram of a processing device for an electrode assembly according to another embodiment of the present application. The processing device 400 comprises: a provision device 410 for providing a cathode plate, an anode plate, a separator and an electrically conductive layer; a connecting device 420 for connecting the electrically conductive layer to the cathode plate at a preset part of the cathode plate, the cathode plate comprising a covered region that is covered by the electrically conductive layer, and the connecting device 420 being used to allow the electrically conductive layer to be in parallel connection with the covered region; and a winding device 430 for winding the cathode plate, the anode plate and the separator, so that the cathode plate, the separator and the anode plate are wound to form a bent region, the preset part being configured such that at least a part of the electrically conductive layer is located in the bent region after winding.

Those skilled in the art should understand that, although some of the embodiments described herein comprise some but not other features included in other embodiments, the combination of the features of different embodiments means being within the scope of the present application and forms different embodiments. For example, in the claims, any one of the embodiments set forth thereby can be used in any combination.

The above embodiments are merely used for illustrating rather than limiting the technical solution of the present application. Although the present application has been illustrated in detail with reference to the foregoing embodiments, it should be understood by those of ordinary skill in the art that the technical solutions specified in the foregoing embodiments may still be modified, according to the appended set of claims.

## Claims

1. An electrode assembly (10), comprising:
a cathode current collector (11), an anode plate (12), and a separator (13) that is used to separate the cathode current collector (11) and the anode plate (12), the cathode current collector (11), the separator (13) and the anode plate (12) being wound to form a bent region (B);
a plurality of electrically conductive layers (14) configured such that at least a part of the electrically conductive layers (14) are provided on a surface of the cathode current collector (11) in the bent region (B), the cathode current collector (11) comprising a regions (11F) that are covered by the electrically conductive layers (14), and the electrically conductive layers (14) being in parallel connection with the regions (11F); and
wherein the plurality of electrically conductive layers (14) are arranged at intervals in a direction parallel to the winding axis (Z) of the electrode assembly (10).

2. The electrode assembly (10) of claim 1, wherein one or both surfaces of the cathode current collector (11) are provided with the electrically conductive layer (14), and/or
wherein at least a part of the electrically conductive layer (14) is provided at a first-bend part (111B) and/or a second-bend part (112B) of the cathode current collector (11) in the bent region (B), and/or
wherein the electrically conductive layer (14) is further provided at a first-bend part (111B) and/or a second-bend part (112B) of the anode plate (12) in the bent region (B), and is in parallel connection with the anode plate (12), and/or
wherein the electrically conductive layer (14) comprises an electrically conductive base layer (1402) that is in parallel connection with the cathode current collector (11) in the bent region B.

3. The electrode assembly (10) of claim 1-2, wherein the electrically conductive layer (14) comprises an electrically conductive base layer (1402) that is in parallel connection with the cathode current collector (11) in the bent region (B) and wherein the entire surface of the side of the electrically conductive base layer (1402) adjacent to the cathode current collector (11) is electrically connected to the regions (11F) in the bent region (B), and a center line (M1) of the bent region (B) passes through the electrically conductive base layer (1402) in a winding direction (A) of the electrode assembly (10).

4. The electrode assembly (10) of claim 3, wherein the electrically conductive layer (14) further comprises:
an ion barrier layer (1401) that is provided on the side of the electrically conductive base layer (1402) away from the cathode current collector (11) and covers the electrically conductive base layer (1402), the ion barrier layer (1401) being used to block at least some of ions from escaping from the cathode current collector (11) located on one side of the ion barrier layer (1401); and
wherein the material of the ion barrier layer (1401) includes at least one of magnesium oxide, calcium oxide, boehmite, wollastonite, barium sulfate, calcium sulfate, calcium carbonate, aluminum oxide, silicon dioxide, polyethylene, polyvinyl chloride, polyacrylic acid/acrylate, butyl benzene, phenylanine, ethylene-vinyl acetate copolymer, polypropylene, polyvinylidene fluoride, carboxymethyl cellulose, epoxy adhesive, silicone, polyurethane adhesive, styrene-isoprene-styrene copolymer adhesive, and modified materials thereof.

5. The electrode assembly (10) of claim 1-2, wherein the electrically conductive layer (14) comprises an electrically conductive base layer (1402) that is in parallel connection with the cathode current collector (11) in the bent region (B) and wherein the electrically conductive base layer (1402) comprises, in the bent region (B) and in the winding direction (A) of the electrode assembly (10), two end portions (1402a) located on two sides of the center line (M1) of the bent region (B), the two end portions (1402a) being respectively electrically connected to the regions (11F).

6. The electrode assembly (10) of claim 5, wherein the electrically conductive base layer (1402) further comprises a main body portion (1402b) that is connected to the two end portions (1402a); and the electrically conductive layer (14) further comprises an ion barrier layer (1401) that is provided between the main body portion (1402b) of the electrically conductive base layer (1402) and the cathode current collector (11) and is used to block at least some of ions from escaping from the cathode current collector (11) located on one side of the ion barrier layer (1401); and
wherein the material of the ion barrier layer (1401) includes at least one of magnesium oxide, calcium oxide, boehmite, wollastonite, barium sulfate, calcium sulfate, calcium carbonate, aluminum oxide, silicon dioxide, polyethylene, polyvinyl chloride, polyacrylic acid/acrylate, butyl benzene, phenylanine, ethylene-vinyl acetate copolymer, polypropylene, polyvinylidene fluoride, carboxymethyl cellulose, epoxy adhesive, silicone, polyurethane adhesive, styrene-isoprene-styrene copolymer adhesive, and modified materials thereof.

7. The electrode assembly (10) of any one of claims 3, 5 and 6, wherein the electrically conductive layer (14) further comprises an insulation layer (1403) that is provided on the side of the electrically conductive base layer (1402) away from the cathode current collector (11) and covers the electrically conductive base layer (1402).

8. The electrode assembly (10) of any one of claims 1-6, wherein the electrically conductive layer (14) comprises an electrically conductive base layer (1402) that is in parallel connection with the cathode current collector (11) in the bent region (B) and wherein a plurality of electrically conductive base layers (1402) are provided, and the plurality of electrically conductive base layers (1402) are arranged at intervals in a direction parallel to a winding axis (Z) of the electrode assembly (10); or
wherein the total current passing area of the electrically conductive base layer (1402) is greater than or equal to 1/3 of the current passing area of the cathode current collector (11) connected to the electrically conductive base layer (1402).

9. The electrode assembly (10) of any one of claims 1-4, wherein the electrically conductive layer (14) comprises an electrically conductive base layer (1402) that is in parallel connection with the cathode current collector (11) in the bent region (B) and wherein the material of the electrically conductive base layer (1402) includes at least one of silver, gold, nickel, copper, aluminum, polypyrrole, polyphenylene sulfide, polyphthalocyanine compound, polyaniline, and polythiophene.

10. A battery cell (7), comprising: a shell (21), an electrolyte, a cover plate (22), and at least one electrode assembly (10) of any one of claims 1-9, wherein
the shell (21) has a receiving cavity and an opening, and the electrode assembly (10) and the electrolyte are received in the receiving cavity; and
the cover plate (22) is used to close the opening of the shell (21).

11. A battery (2), comprising a case (5) and at least one battery cell (7) of claim 10 received in the case (5).

12. A power consuming device configured to receive power provided by a battery (2) of claim 11.

13. A processing method for the electrode assembly (10), according to any one of claims 1-9, the processing method comprising:
providing a cathode current collector (11), an anode plate (12) and a separator (13);
providing a plurality of electrically conductive layers (14) that are arranged at a preset part of the cathode current collector (11), the cathode current collector (11) comprising regions (11F) that are covered by the electrically conductive layers (14), and the electrically conductive layers (14) being in parallel connection with the regions (11F);
winding the cathode current collector (11), the anode plate (12) and the separator (13), so that the cathode current collector (11), the separator (13) and the anode plate (12) are wound to form a bent region (B), the preset part being configured such that at least a part of the electrically conductive layers (14) are located in the bent region (B) after winding; and
wherein the plurality of electrically conductive layers (14) are arranged at intervals in a direction parallel to the winding axis (Z) of the electrode assembly (10).

14. A processing device for the electrode assembly (10), according to any one of claims 1-9, the processing device comprising:
a provision device (410) for providing a cathode current collector (11), an anode plate (12), a separator (13) and a plurality of electrically conductive layers (14);
a connecting device (420) for connecting the electrically conductive layers (14) to the cathode current collector (11) at a preset part of the cathode current collector (11), the cathode current collector (11) comprising regions (11F) that are covered by the electrically conductive layers (14), and the connecting device (420) being used to allow the electrically conductive layers (14) to be in parallel connection with the regions (11F);
a winding device (430) for winding the cathode current collector (11), the anode plate (12) and the separator (13), so that the cathode current collector (11), the separator (13) and the anode plate (12) are wound to form a bent region (B), the preset part being configured such that at least a part of the electrically conductive layers (14) are located in the bent region (B) after winding;
wherein the plurality of electrically conductive layers (14) are arranged at intervals in a direction parallel to the winding axis (Z) of the electrode assembly (10).

## Patentansprüche

1. Elektrodenanordnung (10), umfassend:
einen Kathodenstromkollektor (11), eine Anodenplatte (12) und einen Separator (13), der verwendet wird, um den Kathodenstromkollektor (11) und die Anodenplatte (12) zu trennen, wobei der Kathodenstromkollektor (11), der Separator (13) und die Anodenplatte (12) gewickelt sind, um eine gebogene Region (B) zu bilden;
eine Vielzahl von elektrisch leitenden Schichten (14), die so konfiguriert sind, dass mindestens ein Teil der elektrisch leitenden Schichten (14) auf einer Oberfläche des Kathodenstromkollektors (11) in der gebogenen Region (B) bereitgestellt wird, wobei der Kathodenstromkollektor (11) Regionen (11F) umfasst, die von den elektrisch leitenden Schichten (14) bedeckt sind, und die elektrisch leitenden Schichten (14) in Parallelverbindung mit den Regionen (11F) sind; und
wobei die Vielzahl von elektrisch leitenden Schichten (14) in Intervallen in einer Richtung parallel zu der Wicklungsachse (Z) der Elektrodenanordnung (10) angeordnet sind.

2. Elektrodenanordnung (10) nach Anspruch 1, wobei eine oder beide Oberflächen des Kathodenstromkollektors (11) mit der elektrisch leitenden Schicht (14) versehen sind, und/oder
wobei mindestens ein Teil der elektrisch leitenden Schicht (14) an einem ersten Biegeteil (111B) und/oder einem zweiten Biegeteil (112B) des Kathodenstromkollektors (11) in der gebogenen Region (B) bereitgestellt wird, und/oder
wobei die elektrisch leitende Schicht (14) ferner an einem ersten Biegeteil (111B) und/oder einem zweiten Biegeteil (112B) der Anodenplatte (12) in der gebogenen Region (B) bereitgestellt wird und in Parallelverbindung mit der Anodenplatte (12) ist, und/oder
wobei die elektrisch leitende Schicht (14) eine elektrisch leitende Basisschicht (1402) umfasst, die mit dem Kathodenstromkollektor (11) in der gebogenen Region (B) in Parallelverbindung ist.

3. Elektrodenanordnung (10) nach Anspruch 1 bis 2, wobei die elektrisch leitende Schicht (14) eine elektrisch leitende Basisschicht (1402) umfasst, die mit dem Kathodenstromkollektor (11) in der gebogenen Region (B) in Parallelverbindung ist, und wobei die gesamte Oberfläche der dem Kathodenstromkollektor (11) benachbarten Seite der elektrisch leitenden Basisschicht (1402) mit den Regionen (11F) in der gebogenen Region (B) elektrisch verbunden ist, und eine Mittellinie (M1) der gebogenen Region (B) durch die elektrisch leitende Basisschicht (1402) in einer Wicklungsrichtung (A) der Elektrodenanordnung (10) verläuft.

4. Elektrodenanordnung (10) nach Anspruch 3, wobei die elektrisch leitende Schicht (14) ferner Folgendes umfasst:
eine Ionensperrschicht (1401), die auf der vom Kathodenstromkollektor (11) abgewandten Seite der elektrisch leitenden Basisschicht (1402) bereitgestellt wird und die elektrisch leitende Basisschicht (1402) bedeckt, wobei die Ionensperrschicht (1401) verwendet wird, mindestens einige der Ionen daran zu hindern, aus dem Kathodenstromkollektor (11) zu entweichen, der sich auf einer Seite der Ionensperrschicht (1401) befindet; und
wobei das Material der Ionensperrschicht (1401) mindestens eines von Magnesiumoxid, Kalziumoxid, Böhmit, Wollastonit, Bariumsulfat, Kalziumsulfat, Kalziumkarbonat, Aluminiumoxid, Siliziumdioxid, Polyethylen, Polyvinylchlorid, Polyacrylsäure/Acrylat, Butylbenzol, Phenylanin, Ethylen-Vinylacetat-Copolymer, Polypropylen, Polyvinylidenfluorid, Carboxymethylcellulose, Epoxidklebstoff, Silikon, Polyurethanklebstoff, Styrol-Isopren-Styrol-Copolymer-Klebstoff und modifizierte Materialien davon einschließt.

5. Elektrodenanordnung (10) nach Anspruch 1 bis 2, wobei die elektrisch leitende Schicht (14) eine elektrisch leitende Basisschicht (1402) umfasst, die mit dem Kathodenstromkollektor (11) in der gebogenen Region (B) in Parallelverbindung ist, und wobei die elektrisch leitende Basisschicht (1402) in der gebogenen Region (B) und in der Wicklungsrichtung (A) der Elektrodenanordnung (10) zwei Endabschnitte (1402a) umfasst, die sich auf zwei Seiten der Mittellinie (M1) der gebogenen Region (B) befinden, wobei die beiden Endabschnitte (1402a) jeweils mit den Regionen (11F) elektrisch verbunden sind.

6. Elektrodenanordnung (10) nach Anspruch 5, wobei die elektrisch leitende Basisschicht (1402) ferner einen Hauptkörperabschnitt (1402b) umfasst, der mit den beiden Endabschnitten (1402a) verbunden ist; und die elektrisch leitende Schicht (14) ferner eine Ionensperrschicht (1401) umfasst, die zwischen dem Hauptkörperabschnitt (1402b) der elektrisch leitenden Basisschicht (1402) und dem Kathodenstromkollektor (11) bereitgestellt wird und verwendet wird, mindestens einige der Ionen daran zu hindern, aus dem Kathodenstromkollektor (11) zu entweichen, der sich auf einer Seite der Ionensperrschicht (1401) befindet; und
wobei das Material der Ionensperrschicht (1401) mindestens eines von Magnesiumoxid, Kalziumoxid, Böhmit, Wollastonit, Bariumsulfat, Kalziumsulfat, Kalziumkarbonat, Aluminiumoxid, Siliziumdioxid, Polyethylen, Polyvinylchlorid, Polyacrylsäure/Acrylat, Butylbenzol, Phenylanin, Ethylen-Vinylacetat-Copolymer, Polypropylen, Polyvinylidenfluorid, Carboxymethylcellulose, Epoxidklebstoff, Silikon, Polyurethanklebstoff, Styrol-Isopren-Styrol-Copolymer-Klebstoff und modifizierte Materialien davon einschließt.

7. Elektrodenanordnung (10) nach einem der Ansprüche 3, 5 und 6, wobei die elektrisch leitende Schicht (14) ferner eine Isolationsschicht (1403) umfasst, die auf der dem Kathodenstromkollektor (11) abgewandten Seite der elektrisch leitenden Basisschicht (1402) bereitgestellt wird und die elektrisch leitende Basisschicht (1402) bedeckt.

8. Elektrodenanordnung (10) nach einem der Ansprüche 1 bis 6, wobei die elektrisch leitende Schicht (14) eine elektrisch leitende Basisschicht (1402) umfasst, die mit dem Kathodenstromkollektor (11) in der gebogenen Region (B) in Parallelverbindung ist, und
wobei eine Vielzahl von elektrisch leitenden Basisschichten (1402) bereitgestellt werden und die Vielzahl von elektrisch leitenden Schichten (1402) in Intervallen in einer Richtung parallel zu einer Wicklungsachse (Z) der Elektrodenanordnung (10) angeordnet sind; oder
wobei die gesamte stromdurchlässige Fläche der elektrisch leitenden Basisschicht (1402) größer als oder gleich 1/3 der stromdurchlässigen Fläche des mit der elektrisch leitenden Basisschicht (1402) verbundenen Kathodenstromkollektors (11) ist.

9. Elektrodenanordnung (10) nach einem der Ansprüche 1 bis 4, wobei die elektrisch leitende Schicht (14) eine elektrisch leitende Basisschicht (1402) umfasst, die mit dem Kathodenstromkollektor (11) in der gebogenen Region (B) in Parallelverbindung ist, und wobei das Material der elektrisch leitenden Basisschicht (1402) mindestens eines von Silber, Gold, Nickel, Kupfer, Aluminium, Polypyrrol, Polyphenylensulfid, Polyphthalocyaninverbindung, Polyanilin und Polythiophen einschließt.

10. Batteriezelle (7), umfassend: eine Hülle (21), einen Elektrolyten, eine Deckplatte (22) und mindestens eine Elektrodenanordnung (10) nach einem der Ansprüche 1 bis 9, wobei
die Hülle (21) einen Aufnahmehohlraum und eine Öffnung hat und die Elektrodenanordnung (10) und der Elektrolyt in dem Aufnahmehohlraum aufgenommen sind; und
die Abdeckplatte (22) zum Verschließen der Öffnung der Hülle (21) verwendet wird.

11. Batterie (2), umfassend ein Gehäuse (5) und mindestens eine Batteriezelle (7) nach Anspruch 10, die in dem Gehäuse (5) aufgenommen ist.

12. Strom verbrauchende Vorrichtung, die konfiguriert ist, um von der Batterie (2) nach Anspruch 11 bereitgestellten Strom zu empfangen.

13. Verarbeitungsverfahren für die Elektrodenanordnung (10) nach einem der Ansprüche 1 bis 9, wobei das Verarbeitungsverfahren Folgendes umfasst:
Bereitstellen eines Kathodenstromkollektors (11), einer Anodenplatte (12) und eines Separators (13);
Bereitstellen einer Vielzahl von elektrisch leitenden Schichten (14), die an einem vorgegebenen Teil des Kathodenstromkollektors (11) angeordnet sind, wobei der Kathodenstromkollektor (11) Regionen (11F) umfasst, die von den elektrisch leitenden Schichten (14) bedeckt sind, und wobei die elektrisch leitenden Schichten (14) in Parallelverbindung mit den Regionen (11F) sind;
Wickeln des Kathodenstromkollektors (11), der Anodenplatte (12) und des Separators (13), so dass der Kathodenstromkollektor (11), der Separator (13) und die Anodenplatte (12) so gewickelt werden, dass sie eine gebogene Region (B) bilden, wobei der vorgegebene Teil so konfiguriert ist, dass mindestens ein Teil der elektrisch leitenden Schichten (14) sich nach dem Wickeln in der gebogenen Region (B) befindet;
und
wobei die Vielzahl von elektrisch leitenden Schichten (14) in Intervallen in einer Richtung parallel zu der Wicklungsachse (Z) der Elektrodenanordnung (10) angeordnet sind.

14. Verarbeitungsvorrichtung für die Elektrodenanordnung (10) nach einem der Ansprüche 1 bis 9, wobei die Verarbeitungsvorrichtung Folgendes umfasst:
eine Bereitstellungsvorrichtung (410) zum Bereitstellen eines Kathodenstromkollektors (11), einer Anodenplatte (12), eines Separators (13) und einer Vielzahl von elektrisch leitenden Schichten (14);
eine Verbindungsvorrichtung (420) zum Verbinden der elektrisch leitenden Schichten (14) mit dem Kathodenstromkollektor (11) an einem vorgegebenen Teil des Kathodenstromkollektors (11), wobei der Kathodenstromkollektor (11) Regionen (11F) umfasst, die von den elektrisch leitenden Schichten (14) bedeckt sind, und die Verbindungsvorrichtung (420) verwendet wird, um zu ermöglichen, dass die elektrisch leitenden Schichten (14) mit den Regionen (11F) in Parallelverbindung sind;
eine Wicklungsvorrichtung (430) zum Wickeln des Kathodenstromkollektors (11), der Anodenplatte (12) und des Separators (13), so dass der Kathodenstromkollektor (11), der Separator (13) und die Anodenplatte (12) gewickelt werden, um eine gebogene Region (B) zu bilden, wobei der vorgegebene Teil so konfiguriert ist, dass sich mindestens ein Teil der elektrisch leitenden Schichten (14) nach dem Wickeln in der gebogenen Region (B) befindet;
wobei die Vielzahl von elektrisch leitenden Schichten (14) in Intervallen in einer Richtung parallel zu der Wicklungsachse (Z) der Elektrodenanordnung (10) angeordnet sind.

## Revendications

1. Ensemble électrode (10) comprenant :
un collecteur de courant de cathode (11), une plaque d'anode (12), et un séparateur (13) qui est utilisé pour séparer le collecteur de courant de cathode (11) et la plaque d'anode (12), le collecteur de courant de cathode (11), le séparateur (13) et la plaque d'anode (12) étant enroulés pour former une région coudée (B) ;
une pluralité de couches électriquement conductrices (14) conçues de telle sorte qu'au moins une partie des couches électriquement conductrices (14) soient fournies sur une surface du collecteur de courant de cathode (11) dans la région coudée (B), le collecteur de courant de cathode (11) comprenant des régions (11F) qui sont couvertes par les couches électriquement conductrices (14), et les couches électriquement conductrices (14) étant connectées en parallèle avec les régions (11F) ; et
dans lequel la pluralité de couches électriquement conductrices (14) sont agencées à des intervalles dans une direction parallèle à l'axe d'enroulement (Z) de l'ensemble électrode (10).

2. Ensemble électrode (10) selon la revendication 1, dans lequel une ou les deux surfaces du collecteur de courant de cathode (11) sont pourvues de la couche électriquement conductrice (14), et/ou
dans lequel au moins une partie de la couche électriquement conductrice (14) est fournie au niveau d'une partie premier coude (111B) et/ou d'une partie second coude (112B) du collecteur de courant de cathode (11) dans la région coudée (B), et/ou
dans lequel la couche électriquement conductrice (14) est en outre fournie au niveau d'une partie premier coude (111B) et/ou d'une partie second coude (112B) de la plaque d'anode (12) dans la région coudée (B), et est connectée en parallèle avec la plaque d'anode (12), et/ou
dans lequel la couche électriquement conductrice (14) comprend une couche de base électriquement conductrice (1402) qui est connectée en parallèle avec le collecteur de courant de cathode (11) dans la région coudée B.

3. Ensemble électrode (10) selon les revendications 1-2, dans lequel la couche électriquement conductrice (14) comprend une couche de base électriquement conductrice (1402) qui est connectée en parallèle avec le collecteur de courant de cathode (11) dans la région coudée (B) et dans lequel la totalité de la surface du côté de la couche de base électriquement conductrice (1402) adjacente au collecteur de courant de cathode (11) est électriquement connectée aux régions (11F) dans la région coudée (B), et un axe central (M1) de la région coudée (B) passe à travers la couche de base électriquement conductrice (1402) dans une direction d'enroulement (A) de l'ensemble électrode (10).

4. Ensemble électrode (10) selon la revendication 3, dans lequel la couche électriquement conductrice (14) comprend en outre :
une couche barrière aux ions (1401) qui est fournie sur le côté de la couche de base électriquement conductrice (1402) opposé par rapport au collecteur de courant de cathode (11) et couvre la couche de base électriquement conductrice (1402), la couche barrière aux ions (1401) étant utilisée pour bloquer au moins certains des ions afin de les empêcher de s'échapper du collecteur de courant de cathode (11) situé sur un côté de la couche barrière aux ions (1401) ; et
dans lequel le matériau de la couche barrière aux ions (1401) inclut au moins l'un de l'oxyde de magnésium, l'oxyde de calcium, la boéhmite, la wollastonite, le sulfate de baryum, le sulfate de calcium, le carbonate de calcium, l'oxyde d'aluminium, le dioxyde de silicium, le polyéthylène, le poly(chlorure de vinyle), le poly(acide acrylique)/acrylate, le butylbenzène, la phénylanine, un copolymère éthylène-acétate de vinyle, le polypropylène, le poly(fluorure de vinylidène), la carboxyméthyl cellulose, un adhésif époxy, une silicone, un adhésif polyuréthane, un adhésif copolymère styrène-isoprène-styrène, et des matériaux modifiés associés.

5. Ensemble électrode (10) selon les revendications 1-2, dans lequel la couche électriquement conductrice (14) comprend une couche de base électriquement conductrice (1402) qui est connectée en parallèle avec le collecteur de courant de cathode (11) dans la région coudée (B) et dans lequel la couche de base électriquement conductrice (1402) comprend, dans la région coudée (B) et dans la direction d'enroulement (A) de l'ensemble électrode (10), deux parties d'extrémité (1402a) situées sur deux côtés de l'axe central (M1) de la région coudée (B), les deux parties d'extrémité (1402a) étant respectivement électriquement connectées aux régions (11F).

6. Ensemble électrode (10) selon la revendication 5, dans lequel la couche de base électriquement conductrice (1402) comprend en outre une partie corps principal (1402b) qui est connectée aux deux parties d'extrémité (1402a) ; et la couche électriquement conductrice (14) comprend en outre une couche barrière aux ions (1401) qui est fournie entre la partie corps principal (1402b) de la couche de base électriquement conductrice (1402) et le collecteur de courant de cathode (11) et est utilisée pour bloquer au moins certains des ions pour éviter qu'ils s'échappent du collecteur de courant de cathode (11) situé sur un côté de la couche barrière aux ions (1401) ; et
dans lequel le matériau de la couche barrière aux ions (1401) inclut au moins l'un de l'oxyde de magnésium, l'oxyde de calcium, la boéhmite, la wollastonite, le sulfate de baryum, le sulfate de calcium, le carbonate de calcium, l'oxyde d'aluminium, le dioxyde de silicium, le polyéthylène, le poly(chlorure de vinyle), le poly(acide acrylique)/acrylate, le butylbenzène, la phénylanine, un copolymère éthylène-acétate de vinyle, le polypropylène, le poly(fluorure de vinylidène), la carboxyméthyl cellulose, un adhésif époxy, une silicone, un adhésif polyuréthane, un adhésif copolymère styrène-isoprène-styrène, et des matériaux modifiés associés.

7. Ensemble électrode (10) selon l'une quelconque des revendications 3, 5 et 6, dans lequel la couche électriquement conductrice (14) comprend en outre une couche d'isolation (1403) qui est fournie sur le côté de la couche de base électriquement conductrice (1402) opposé au collecteur de courant de cathode (11) et couvre la couche de base électriquement conductrice (1402).

8. Ensemble électrode (10) selon l'une quelconque des revendications 1-6, dans lequel la couche électriquement conductrice (14) comprend une couche de base électriquement conductrice (1402) qui est connectée en parallèle avec le collecteur de courant de cathode (11) dans la région coudée (B) et dans lequel une pluralité de couches de base électriquement conductrices (1402) sont fournies, et la pluralité de couches de base électriquement conductrices (1402) sont agencées à des intervalles dans une direction parallèle à un axe d'enroulement (Z) de l'ensemble électrode (10) ; ou
dans lequel l'aire de passage de courant totale de la couche de base électriquement conductrice (1402) est supérieure ou égale à 1/3 de l'aire de passage de courant du collecteur de courant de cathode (11) connectée à la couche de base électriquement conductrice (1402).

9. Ensemble électrode (10) selon l'une quelconque des revendications 1-4, dans lequel la couche électriquement conductrice (14) comprend une couche de base électriquement conductrice (1402) qui est connectée en parallèle avec le collecteur de courant de cathode (11) dans la région coudée (B) et dans lequel le matériau de la couche de base électriquement conductrice (1402) inclut au moins l'un de l'argent, de l'or, du nickel, du cuivre, de l'aluminium, du polypyrrole, du poly(sulfure de phénylène), d'un composé polyphtalocyanine, de la polyaniline et du polythiophène.

10. Cellule de batterie (7), comprenant : une enveloppe (21), un électrolyte, une plaque de couvercle (22), et au moins un ensemble électrode (10) selon l'une quelconque des revendications 1 à 9, dans laquelle
l'enveloppe (21) comporte une cavité de réception et une ouverture, et l'ensemble électrode (10) et l'électrolyte sont reçus dans la cavité de réception ; et
la plaque de couverture (22) est utilisée pour fermer l'ouverture de l'enveloppe (21).

11. Batterie (2), comprenant un boîtier (5) et au moins une cellule de batterie (7) selon la revendication 10 reçue dans le boîtier (5).

12. Dispositif de consommation d'énergie conçu pour recevoir l'énergie fournie par une batterie (2) selon la revendication 11.

13. Procédé de traitement destiné à l'ensemble électrode (10), selon l'une quelconque des revendications 1 à 9, le procédé de traitement comprenant les étapes consistant à :
fournir un collecteur de courant de cathode (11), une plaque d'anode (12) et un séparateur (13) ;
fournir une pluralité de couches électriquement conductrices (14) qui sont agencées au niveau d'une partie prédéfinie du collecteur de courant de cathode (11), le collecteur de courant de cathode (11) comprenant des régions (11F) qui sont couvertes par les couches électriquement conductrices (14), et les couches électriquement conductrices (14) étant connectées en parallèle avec les régions (11F) ;
enrouler le collecteur de courant de cathode (11), la plaque d'anode (12) et le séparateur (13), de telle sorte que le collecteur de courant de cathode (11), le séparateur (13) et la plaque d'anode (12) soient enroulés pour former une région coudée (B), la partie prédéfinie étant conçue de telle sorte qu'au moins une partie des couches électriquement conductrices (14) soient situées dans la région coudée (B) après l'enroulement ; et
dans lequel la pluralité de couches électriquement conductrices (14) sont agencées à des intervalles dans une direction parallèle à l'axe d'enroulement (Z) de l'ensemble électrode (10).

14. Dispositif de traitement destiné à l'ensemble électrode (10), selon l'une quelconque des revendications 1 à 9, le dispositif de traitement comprenant :
un dispositif de fourniture (410) destiné à fournir un collecteur de courant de cathode (11), une plaque d'anode (12), un séparateur (13) et une pluralité de couches électriquement conductrices (14) ;
un dispositif de connexion (420) destiné à connecter les couches électriquement conductrices (14) au collecteur de courant de cathode (11) au niveau d'une partie prédéfinie du collecteur de courant de cathode (11), le collecteur de courant de cathode (11) comprenant des régions (11F) qui sont couvertes par les couches électriquement conductrices (14), et le dispositif de connexion (420) étant utilisé pour permettre que les couches électriquement conductrices (14) soient connectées en parallèle avec les régions (11F) ;
un dispositif d'enroulement (430) destiné à enrouler le collecteur de courant de cathode (11), la plaque d'anode (12) et le séparateur (13), de telle sorte que le collecteur de courant de cathode (11), le séparateur (13) et la plaque d'anode (12) soient enroulés pour former une région coudée (B), la partie prédéfinie étant conçue de telle sorte qu'au moins une partie des couches électriquement conductrices (14) soient situées dans la région coudée (B) après l'enroulement ;
dans lequel la pluralité de couches électriquement conductrices (14) sont agencées à des intervalles dans une direction parallèle à l'axe d'enroulement (Z) de l'ensemble électrode (10).
